# EUROPEAN PATENT APPLICATION

(11) **EP 0 974 437 A2**
(43) Date of publication of application: **26.01.2000**
(21) Application number: 99305739.7
(22) Date of filing: 20.07.1999
(51) Int. Cl.: B28B 13/02, B28B 1/00, B28B 7/00, B44C 1/26

(54) **Method for producing patterned shaped articles**

(30) Priority: 23.07.1998 JP 20734498
(71) Applicant: CCA INC., Chiyoda-ku, Tokyo (JP)
(72) Inventor: Uchida, Hiroshi, Ashikaga-shi, Tochigi-ken (JP)
(74) Representative: Smith, Norman Ian

(57) **Abstract**

A method for producing a patterned shaped article (1) includes the steps of supplying base particles (P1) and ornamental particles (P2) into particle-retaining spaces (4) of a retainer (3), at positions corresponding to a pattern course to be formed and mixing the base particles (P1) and ornamental particles (P2) within the particle-retaining spaces (4) while supplying base particles (P1) alone into particle-retaining spaces (4) of the retainer (3) at positions corresponding to a base course, removing the retainer (3); and setting the pattern course and base course into an integral mass.

## Description

The present invention relates to a method for producing patterned shaped articles.

In recent years there has been an increasing demand for patterned shaped products of concrete, artificial stone, ceramic, metal, plastic, etc.; patterned shaped products having impasto layers; patterned shaped foodstuffs; and the like. Also with respect to patterned shaped articles to be formed in the stage of obtaining such patterned shaped products, therefore, enhanced productivity has been demanded. In conventional methods of producing patterned shaped articles, a pattern has been expressed by changing the color and material of particles to be supplied into a plurality of particle-retaining spaces of a retainer. For this reason, it has been necessary for at least two kinds of particles for a pattern to be mixed in advance.

However, such a preparatory step requires much time and makes an entire process cumbersome. In the case of a complicated pattern, only its image formation requires a unit of minute to a unit of hour. Thus, with conventional methods of producing patterned shaped articles, the entire process is cumbersome and the productivity is not good.

The present invention has been proposed in view of these circumstances and has as its object to provide a method for producing patterned shaped articles that simplifies the entire process and enhances the productivity.

The present invention provides a method for producing a patterned shaped article, characterised by the steps of supplying base particles and ornamental particles into particle-retaining spaces of a retainer at positions corresponding to a pattern course to be formed and mixing the base particles and ornamental particles within the particle-retaining spaces while supplying base particles predetermined amount of ornamental particles alone into particle retaining spaces of the retainer at positions corresponding to a base course, removing the retainer, and setting the pattern course and the base course into an integral mass.

The invention is characterised in that the setp of using a measuring body to measure a predetermined amount of ornamental particles corresponding to an amount of a pattern to be expressed is carried out before supplying into the particle-retaining spaces.

The measurement can be attained on the basis of the electro-photographic technology, electronic printing technology or optical printing technology that can develop a latent image formed on a dielectric.

The above and other objects, features and advantages of the present invention will become apparent from the description given hereinbelow with reference to the accompanying drawings, in which:-

FIG. 1 is a perspective view showing an example of patterned shaped article obtained by the method according to a first embodiment of the present invention.

FIG. 2 is a perspective view showing another example of patterned shaped article with a backing layer, obtained by the method according to the first embodiment.

FIG. 3 is a perspective view of an example of retainer used in the method according to the first embodiment.

FIG. 4 is a cross-sectional view taken along line IV-IV in FIG. 3.

FIG. 5 is a perspective view showing an example of measuring body used in the method according to the first embodiment.

FIG. 6 is an explanatory view showing how a latent image is formed on a dielectric using a discharge probe.

FIG. 7 is a perspective view showing the latent image formed on the dielectric.

FIG. 8 is a perspective view showing a developing step using a developing roller.

FIG. 9 is a perspective view showing development on the dielectric.

FIG. 10 is an explanatory view showing the step of supplying ornamental particles into the retainer.

FIG. 11 is an explanatory view showing the step of supplying base particles into the retainer.

FIG. 12 is an explanatory view showing the step of mixing the ornamental particles and the base particles.

FIG. 13 is a perspective view showing a patterned shaped article placed on a base surface after removal of the retainer.

FIG. 14 is an explanatory view showing the step of pressing a patterned shaped article.

FIG. 15 is a perspective view showing another example of the step of forming a latent image.

FIG. 16 is an explanatory view showing another example of the mixing step.

FIG. 17(A) is an explanatory view showing another example of the mixing step.

FIG. 17(B) is an explanatory view showing another example of the mixing step.

FIG. 18 is an explanatory view showing another example of the mixing step.

FIG. 19 is an explanatory view showing another example of the mixing step.

FIG. 20 is an explanatory view showing another example of the mixing step.

FIG. 21 is an explanatory view showing another example of the mixing step.

FIG. 22 is an explanatory view showing an air permeable member used as a lid for the retainer and a porous member used as a weight for the air permeable member in the mixing step.

FIG. 23 is an explanatory perspective view showing a latent image forming step using a mask.

FIG. 24 is an explanatory side view showing the latent image forming step.

FIG. 25 is an explanatory side view showing development on a nonwoven fabric.

FIG. 26 is an explanatory side view showing a retainer applied to the nonwoven fabric.

FIG. 27 is a perspective view showing the entire configuration adopted in the method according to a second embodiment of the present invention.

FIG. 28 is a side view of FIG. 27.

FIG. 29 is a side view showing a modification of the second embodiment .

FIG. 30 is a side view showing another modification wherein the decorative particles are supplied indirectly.

FIG. 31 is an explanatory view showing the configuration adopted in the method according to a third embodiment of the present invention.

FIG. 32 is a side view showing a modification of the third embodiment .

FIG. 33 is an explanatory view showing another modification of the third embodiment.

FIG. 34 is an explanatory view showing still another modification of the third embodiment.

FIG. 35 is an explanatory view showing the configuration adopted in the method according to a fourth embodiment of the present invention.

FIG. 36 is a perspective view showing a retainer used in the fourth embodiment.

FIG. 37 is an explanatory view showing the configuration adopted in the method according to a fifth embodiment according to the present invention, with an inset showing an enlarged perspective view of a cell form.

FIG. 38 is a perspective view showing an ornamental particle supply device used in the fifth embodiment.

FIG. 39 is an explanatory view showing a modification of the fifth embodiment, with an inset showing an enlarged perspective view of an ornamental particle supply device and a cell form.

FIG. 40 is a perspective view showing the configuration adopted in the method according to a sixth embodiment of the present invention.

FIG. 41 is a perspective view showing another example of the measuring body used in FIG. 40.

FIG. 42 is an explanatory view showing how the measuring body of FIG. 41 is used.

FIG. 43 is a perspective view showing another example of retainer.

FIG. 44 is a perspective view showing still another example of retainer.

FIG. 45 is a perspective view showing yet another example of retainer.

FIG. 46 is a schematic view showing another example of dielectric.

FIG. 47 is a schematic view showing another example of dielectric.

FIG. 48 is a schematic view showing another example of dielectric.

FIG. 49 is a schematic view showing another example of dielectric.

FIG. 50 is a schematic view showing another example of dielectric.

FIG. 51 is a schematic view showing another example of dielectric.

FIG. 52 is a schematic view showing another example of dielectric.

FIG. 53 is a schematic view showing another example of dielectric.

FIG. 54 is a schematic view showing another example of dielectric.

FIG. 55 is a schematic view showing another example of dielectric.

The preferred embodiments of the present invention will be described in detail with reference to the accompanying drawings.

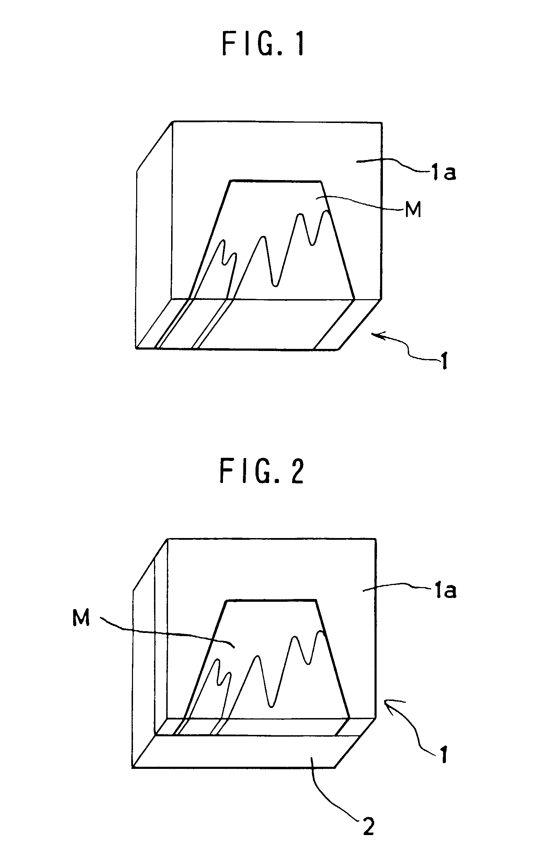

Now, the first embodiment will be described in detail with reference to FIG. 1 to FIG. 26.

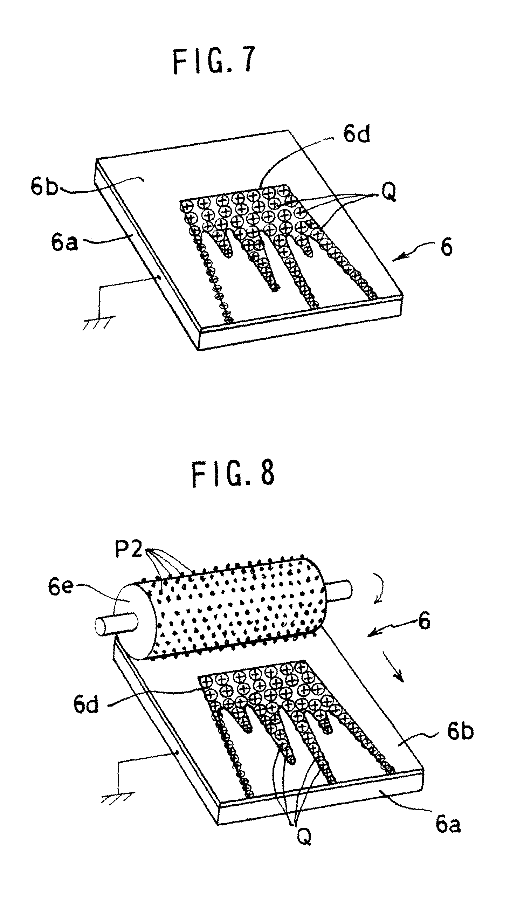

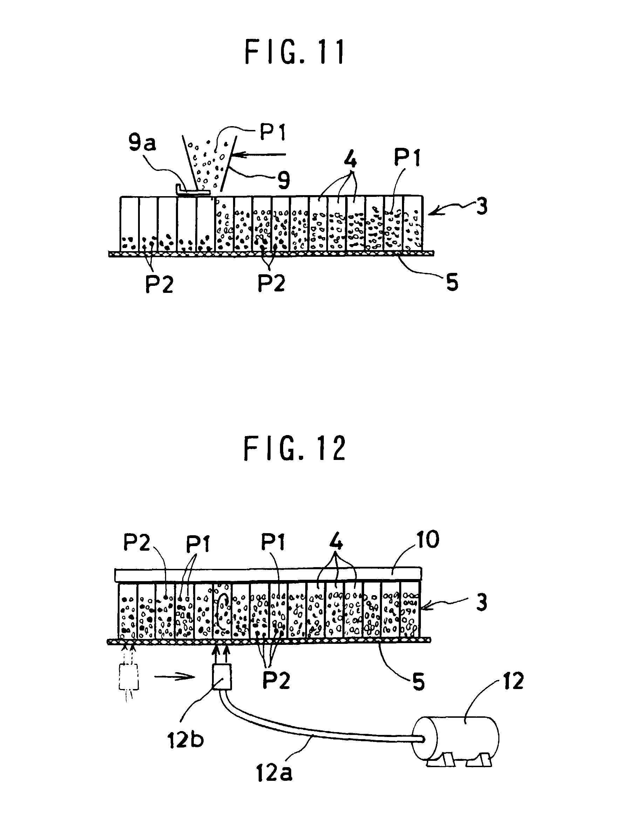

FIG. 1 is a perspective view showing one example of a patterned shaped article 1 produced by the method of the present invention. The pattern M is formed from the top surface 1a over the entire thickness of the shaped article 1 and constituted of a mixture of base particles P1 (FIG. 11) and ornamental particles P2 (FIG 8). As shown in FIG. 2, the patterned shaped article 1 is generally reinforced with a backing layer 2.

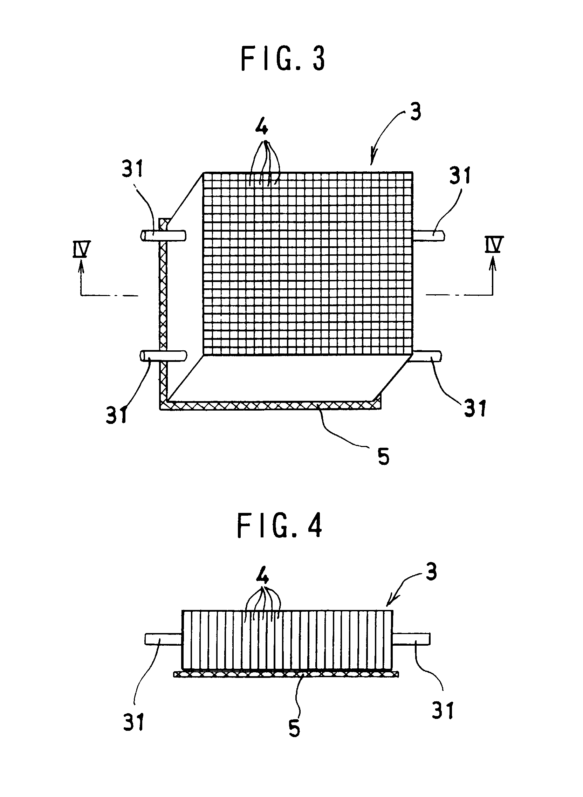

FIG. 3 is a perspective view showing one example of a retainer 3 used in this embodiment, and FIG. 4 is a cross section taken along line IV-IV in FIG. 3. The retainer 3 serves to retain particles in producing a patterned shaped article 1 as will be described afterwards and, as shown, comprises a honeycomb like cell form rectangular in cross section and provided with a plurality of slender, cylindrical particle-retaining spaces (cells) 4 arranged densely, and shaft handles 31 extending from the lateral sides of the cell form. The cells 4 open at the tops and bottoms. An air-permeable member 5 of nonwoven fabric is attached to the bottom of the retainer 3.

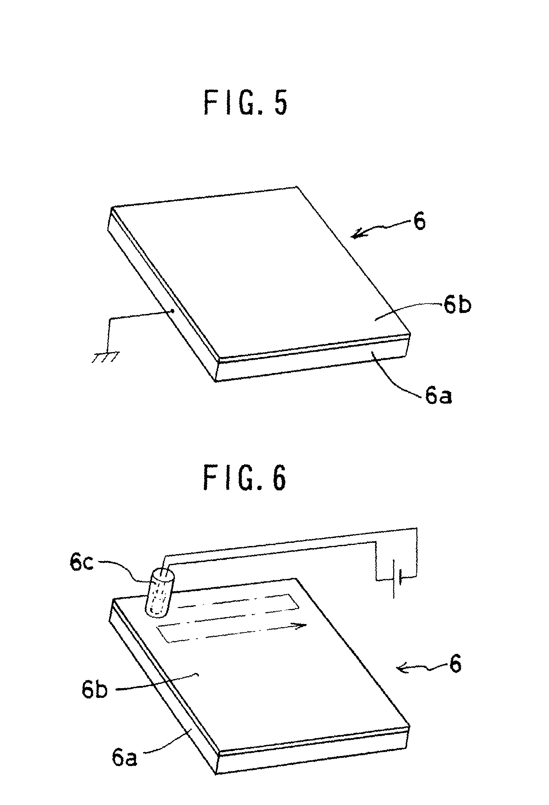

FIG. 5 is a perspective view showing one example of a measuring body 6 used in this embodiment. The measuring body 6 is a device for measuring and controlling the supply amount of the ornamental particles P2 and forming an electrostatic latent image 6d (FIG. 7) corresponding to the pattern M. As shown. the measuring body 6 comprises a flat substrate 6a and a dielectric 6b attached to the substrate 6a.

Now, a method for producing a patterned shaped article 1 using the retainer 3 and measuring body 6 will be described with reference to FIG. 6 to FIG. 14.

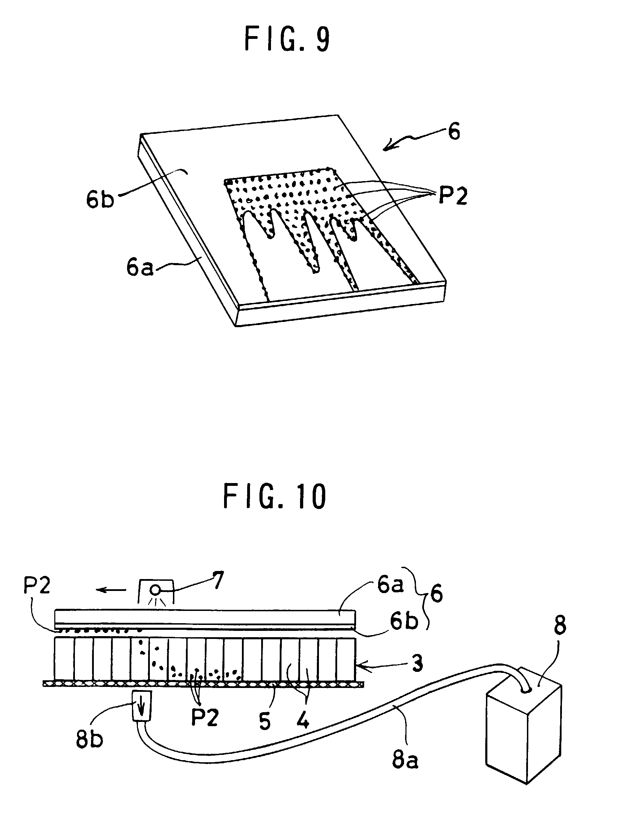

First, the measuring body 6 is used to form the latent image 6d on the dielectric 6b in accordance with the electro-static recording method and, at the same time, measure the ornamental particles P2. To be specific, by scanning a one-side control type discharge probe 6c in the lateral and longitudinal directions relative to the dielectric 6b as shown in FIG. 6 while utilizing the electronic recording system (electrography) of the electrostatic recording method to use digital image data stored in a memory (not shown), the dielectric 6b is charged with predetermined electric charges Q that form on the dielectric 6b the latent image 6d corresponding to the pattern M, as shown in FIG. 7. It is determined depending on the charge characteristic the ornamental particles P2 have whether the electric charges Q are positive or negative. A developing roller 6e having the ornamental particles P2 adhering to the periphery thereof as shown in FIG. 8 is then rolled on the dielectric 6b. As a result, the ornamental particles P2 are attached only to the electric charges Q constituting the latent image 6d. This means that the latent image 6d has been developed on the dielectric 6b as shown in FIG. 9.

The measuring body 6 is turned upside down as shown in FIG. 10, and kept in contact with the upper side of the retainer 3, with the dielectric 6b directed downward. Then, a corona discharge device 7 is used to carry out corona discharge from the back side of the measuring body 6 (substrate 6a) for applying reverse electric charges -Q onto the substrate 6a, thereby cancelling the potential of the dielectric 6b and releasing the ornamental particles P2 from the dielectric 6b. As a result, the ornamental particles P2 falls into the corresponding cells 4, meaning that the ornamental particles P2 are supplied into the retainer 3 at positions corresponding to the pattern M. In this case, a suction nozzle 8b connected via a tube 8a to a suction device 8 is preferably disposed immediately beneath the air permeable member 5 of nonwoven fabric attached to the bottom of the retainer 3 to suck the air in the cells 4. This can promote supply of the ornamental particles P2 into the retainer 3.

A series of the steps of forming the latent image 6d, effecting the development thereof and supplying the ornamental particles P2 into the retainer 3 is carried out once or more, with the result that the ornamental particles P2 in an amount required for expressing the pattern M are supplied into the retainer 3. Thus, the quantity measurement and supply of the ornamental particles P2 by the measuring body 6 are completed.

Subsequently, as shown in FIG. 11 the base particles P1 are supplied into each cell 4 in a predetermined amount smaller than the volume of each cell 4, using a base particle supply device 9 with its gate 9a controlled to supply a constant quantity of base particles P1. The time the base particles P1 are supplied may be prior to the supply of the ornamental particles P2. Thus, some cells 4 are supplied with the base particles P1 alone and others with both the base particles P 1 and the ornamental particles P2.

Then, as shown in FIG. 12, the upper side of the retainer 3 is closed with a lid 10, and an air jet nozzle 12b connected via a tube 12a to an air supply device 12 is disposed below the air permeable member 5 of nonwoven fabric. By blowing air into each cell 4 from the air jet nozzle 12b while moving the air jet nozzle 12b, the base particles P1 and the ornamental particles P2 are fluidized within each cell 4 to obtain a uniform mixture therein. Further, the measuring body 6 can be used to also serve as the lid 10.

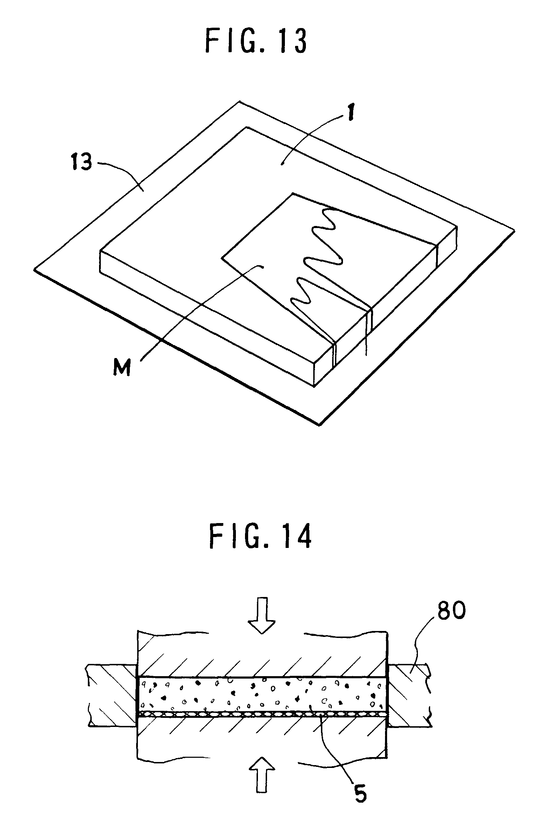

The lid 10 is then removed from the upper side of the retainer 3 and a plate 13 that will be the base surface is placed on the upper side of the retainer 3. The retainer 3 is then turned upside down with the plate applied to the upper side thereof, and the retainer 3 with the air permeable member 5 is removed to obtain a patterned shaped article 1 on the plate 3 as shown in FIG. 13. The patterned shaped article 1 is allowed to set, with or without a backing layer 2 being overlaid thereon, into an integral mass. Thus, a set shaped article with a desired pattern can be obtained.

As described above, a patterned shaped article 1 is produced by effecting the formation of a latent image, development of the latent image with the ornamental particles P2 and measurement of the amount of the ornamental particles P2 on the measuring body 6, fluidizing and mixing the base particles P1 and the ornamental particles P2 within the retainer 3, and removing the retainer 3. Although the portions of the partition walls defining the cells 4 of the retainer 3 are vacant at the moment the retainer 3 has been removed, since the particles are dry and has high fluidity, the vacant portions are fully filled immediately by the cave-in action of the particles, with the boundary between the base course and the pattern course kept clear-cut.

After the step of mixing the base particles P1 and the ornamental particles P2, it can be adopted to insert the retainer 3 within a frame 80, with the air permeable member 5 of nonwoven fabric or the backing layer 2 disposed on the lower surface of the air permeable member 5 used as the bottom of the retainer 3, then remove the retainer 3, and press-form the particles into an integral mass.

Of the process of forming the patterned shaped article 1, other examples of the latent image forming step and mixing step will be described hereinafter.

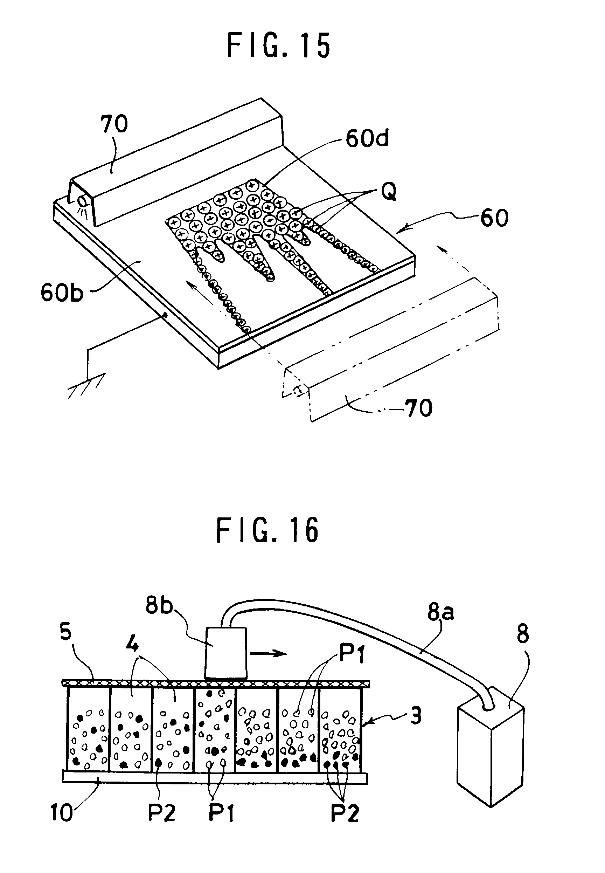

FIG. 15 shows another example of the latent image forming step. In the previous example shown in FIG. 6 and FIG. 7, electric charges Q are applied to the dielectric 6b by scanning the discharge probe 6c laterally and longitudinally relative to the dielectric 6b. In this example, however, a dielectric 60b of a measuring body 60 is provided with a dielectric section corresponding to the pattern M portion and a conductive section corresponding to the remaining portion. A landscape-orientation corona discharge device 70 is scanned relative to the dielectric 60b in one direction to effect corona discharge to store the electric charges Q in the patterned dielectric section. A latent image 60d can thus be formed on the dielectric 60b.

Since the dielectric 60b is patterned beforehand with the dielectric section, as described above, mere repetition of corona discharge can produce the same latent image. This enables the productivity to be greatly enhanced when shaped articles with the 10 same pattern are mass-produced. Further, one-direction scanning of the landscape-orientation corona discharge device 70 can produce the latent image 60a for a short period of time.

Other examples of the mixing step than that shown in FIG. 12 will be described.

In the example shown in FIG. 16, the retainer 3 is closed with the lid 10 similarly in FIG. 12 and turned upside down so that the lid 10 directs downward. Then, the suction device 8 shown in FIG. 10 is used so that the suction nozzle 8b connected to the suction device 8 via the tube 8a sucks up the particles within the cells 4 of the retainer 3 and moves on the air permeable member 5 of nonwoven fabric to allow the particles to spontaneously fall downward. By repetition of the suction and the spontaneous fall, the base particles P1 and ornamental particles P2 can be fluidized and admixed with each other.

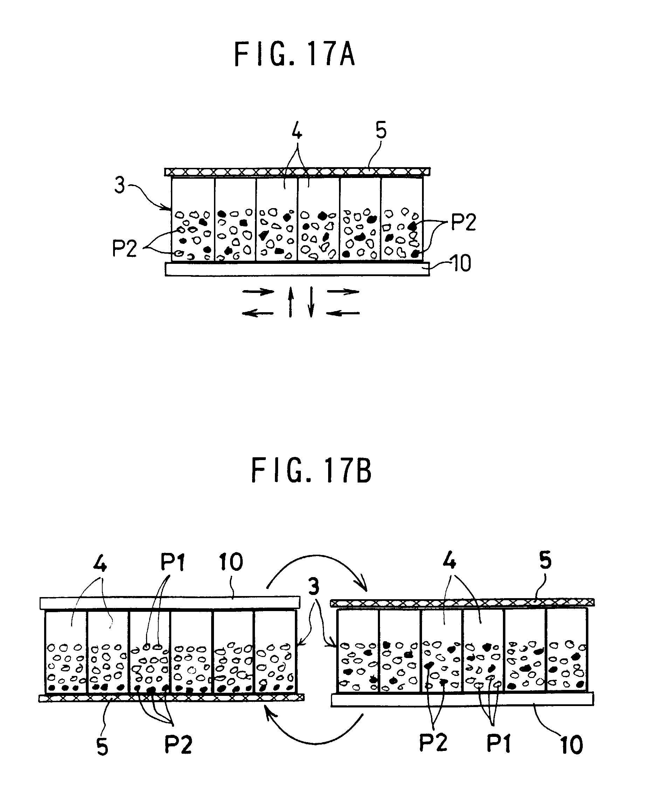

In the examples shown in FIGs. 17A and 17B, the base particles P1 and ornamental particles P2 are fluidized and mixed , with the retainer 3 supplied with the particles and closed with the lid 10, by repeating the application of vibration to the entire retainer 3 (FIG 17A) or by repeating the action of turning upside down the retainer 3 (FIG. 17B). The vibrating apparatus and turning apparatus used in these examples, although not shown, may be of any type.

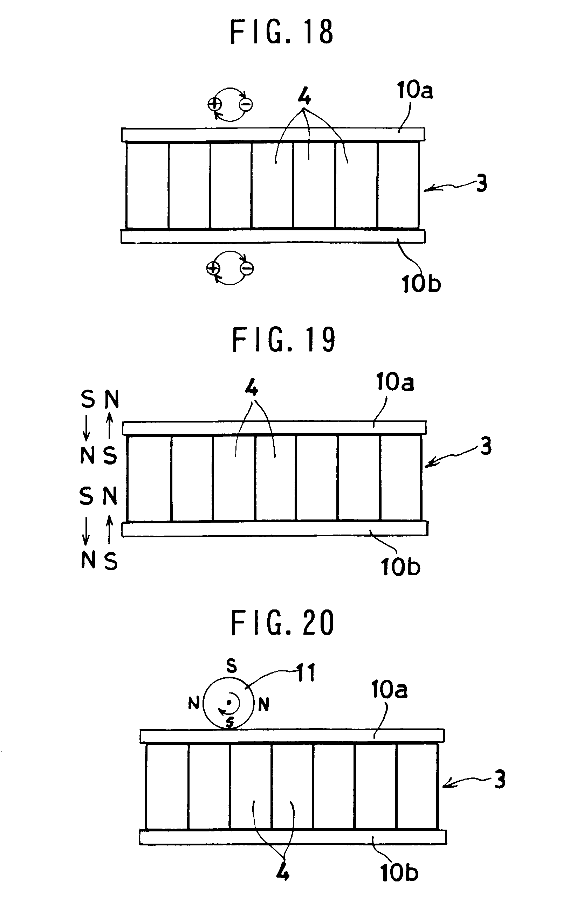

In the example of FIG. 18, the retainer 3 is closed with upper and lower lids 10a and 10b each made of a dielectric. The lids 10a and 10b are then charged with electricity to utilize electrostatic power to adsorb the particles onto the lids and is subsequently relieved of electric charge. As a consequence, the base particles P1 and ornamental particles P2 are fluidized and mixed with each other. This can also be attained by electrifying the upper lid 10a alone, for example, to adsorb the particles onto the upper lid 10a, de-electrifying the upper lid 10a to allow the particles to spontaneously fall off, and repeating the electrification and de-electrification.

In the example of FIG. 19, each of the upper and lower lids 10a and lOb is provided with or formed of an electromagnet. This example can be used when at least one of the base particles P1 and the ornamental particles P2 is magnetical. The magnetic polarity of each lid is set reversible to enable the particles to be adsorbed onto and fall off the lid, thereby fluidizing and mixing the base particles P1 and ornamental particles P2. The same effect can be obtained by magnetizing the upper lid 10a along, for example, to adsorb the particles, demagnetizing the upper lid 10a to allow the particles to fall off, and repeating the magnetization and demagnetization.

The example of FIG. 20 can be used when at least one of the base particles P1 and the ornamental particles P2 is magnetical, similarly to the example shown in FIG. 19. In this example, a rotary magnet 11 having N poles and S poles alternately disposed is caused to roll on the upper lid 10a of the retainer 3 to utilize the magnetic force adsorbing the particles onto and releasing (spontaneously dropping) them from the upper lid 10a, thereby fluidizing and mixing the base particles P1 and the ornamental particles P2.

In the mixing step using air blowing, the air should be made dry or wet in accordance with the conditions under which the particles are caused to set. When moist air is used, air, solvent, additives, etc. are preferably used in the form vapor or spray. In the press-forming step for producing a patterned shaped article of ceramic, concrete, foodstuffs, etc., the particles are preferably in a suitable wet condition of about 3 to 20% wettability. Unless such a suitable wet condition might be maintained by the use of dry air to be blown into the cells in the fluidizing and mixing step, it is preferable to use air wet to a suitable extent. If the particles are too dry to set, they should be positively moistened prior to the setting step. More efficient mixing can be attained by giving slight vibration to a slender supply nozzle or varying the supply rate of air to induce a turbulent flow of air. Various kinds of gases including inert gas can be used in place of air.

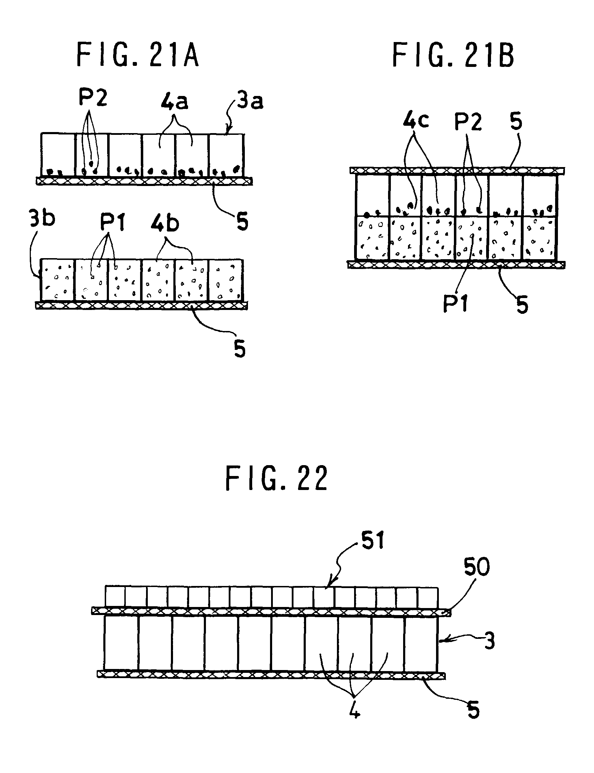

In the mixing step shown in FIG. 21, two retainers 3a and 3b having particle-retaining spaces 4a and 4b respectively, in which the ornamental particles P2 and the base particles P1 are respectively retained, are prepared as shown in FIG 12(A), and the two retainers 3a and 3b are then disposed one on top of the other and the air permeable member 5 of nonwoven fabric intervening between the two retainers 3a and 3b is removed and placed on the top of the upper retainer to form enlarged particle-retaining spaces 4c (4a + 4b) as shown in FIG. 21(B). In this state, the fluidizing and mixing step is carried out. The enlarged particle-retaining spaces can be formed by disposing one of the retainers 3a and 3b not supplied with particles on the top of the other retainer supplied with both the base particles P1 and the ornamental particles P2. With the enlarged article-retaining spaces, the fluidizing and mixing step can be efficiently effected for a short period of time.

The air permeable member 5 attached to the bottom of the retainer 3 may be formed of paper, woven fabric, knit fabric, vinyl, plastic, etc. in place of nonwoven fabric.

In the first embodiment, the lid 10 is used to cover the top side of the retainer 3. However, any of various air permeable members 50 of nonwoven fabric, paper, woven fabric, knit fabric, vinyl, plastic, etc. can be used instead. In this case, a perforated member 51 of porous ceramic, metal sponge, hard sponge, net, perforated plate, etc. is preferably used for holding the air permeable member 50 as shown in FIG. 22, and air is sucked from or blown into the particle retaining spaces 4 via the perforated member 51 to effect the fluidizing and mixing step. Use of the perforated member 51 in combination of the air permeable member 50 is advantageous because the air permeable member 50 is prevented from shifting in sucking air from or blowing it into the particle-retaining spaces 4 and because the particles in a particle-retaining space 4 are not introduced erroneously into adjacent particle-retaining spaces 4 since the air permeable member 50 is held fixed to the retainer 3 by the perforated member 51. This combination of air permeable member 50 and perforated member 51 can also be used in place of the air permeable membrane 5 of nonwoven fabric attached to the bottom of the retainer. In addition, if the perforated member 51 is a porous member, the air permeable member 50 can be eliminated.

Furthermore, in the case where the fluidizing and mixing step is carried out by applying vibration to the retainer using ultrasonic waves or a vibration apparatus as shown in FIG. 17A, by turning the retainer 3 upside down as shown in FIG. 17B or by utilizing electrical or magnetical force as shown in FIG. 18 to FIG. 20, there is no need to use the air permeable member 5 of nonwoven fabric etc. although the member 5 is shown in FIG. 17, but the upper and lower lids 10a and lOb of any material can be used.

As has been described in the foregoing, since according to the first embodiment of the present invention base particles and ornamental particles are supplied into particle-retaining spaces of a retainer at positions corresponding to a pattern to be expressed and mixed within the spaces, there is no need to take the preparatory mixing step that has heretofore been carried out. Therefore, the entire process for forming a patterned shaped article can be greatly simplified. In addition, since the space required for the mixing step is restricted to the narrow interior of the retainer, the fluidizing and mixing step can easily be effected with high efficiency. Therefore, patterned shaped articles can be produced at epochally high speeds to greatly enhance the productivity. These effects will be heightened in producing shaped articles with a complicated pattern. The image forming time that has taken a unit of minute to a unit of hour will be shortened to a unit of second to a unit of minute, and the manufacturing cost will be greatly reduced. Furthermore, since the fluidizing and mixing step is carried out at each cell, a device for carrying out this step can be constituted of a mechanically simple, small-sized device. This can realize reduction of the entire size of an apparatus for producing patterned shaped articles.

Since the measuring body measures the predetermined amount of ornamental particles corresponding to the amount of a pattern to be expressed and supplies the predetermined amount of ornamental particles into the corresponding particle-retaining spaces, the predetermined amount of the ornamental particles can be measured every one particle-retaining space with high precision. This enables a pattern to be expressed precisely.

Since the measurement of the ornamental particle quantity is carried out on the basis of the electrophotographic technology, electronic printing technology or optical printing technology that can develop a latent image formed on a dielectric, the measurement control precision can be greatly enhanced. This also enables a pattern to be expressed precisely.

The aforementioned method can produce, with ease, concrete shaped articles, artificial stone shaped articles, ceramic shaped articles, raw products for ceramic shaped articles, metal shaped articles, shaped articles having impasto layers, plastic shaped articles, confectionery shaped articles, other shaped foodstuffs, and the like, with a pattern exposed in the form of a pattern course to a partial or entire surface thereof. Even when the surface of a patterned shaped article is worn out, the pattern expressed neither disappear nor is blurred.

Since the pattern course is formed by combining two kinds of dry particles, the fine gaps formed when the retainer has been removed are filled by the cave-in action of the particles, resulting in a clear-cut pattern with the boundary between the pattern course and the base course held clear and fine.

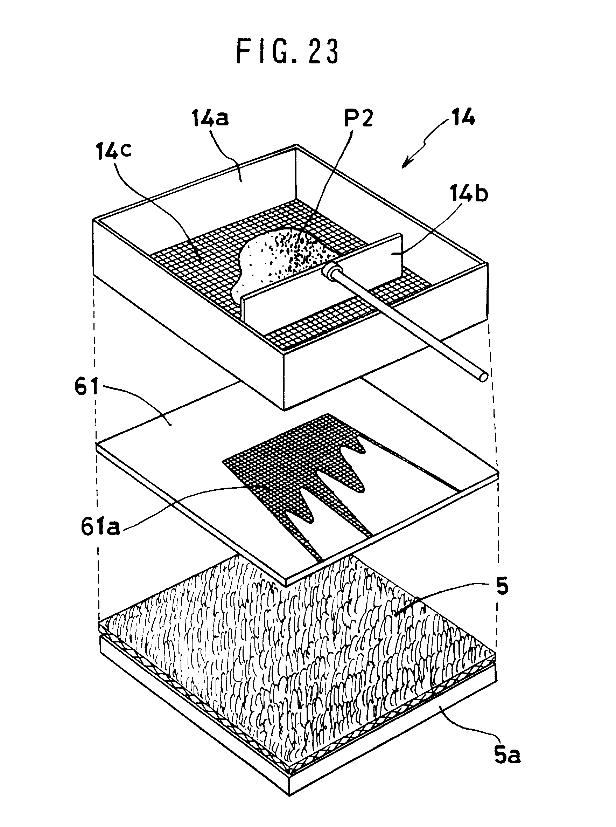

While the aforementioned method forms a latent image using a dielectric, a modified method using a mask instead of the dielectric to form a latent image will be described with respect to FIG. 23 to FIG. 26.

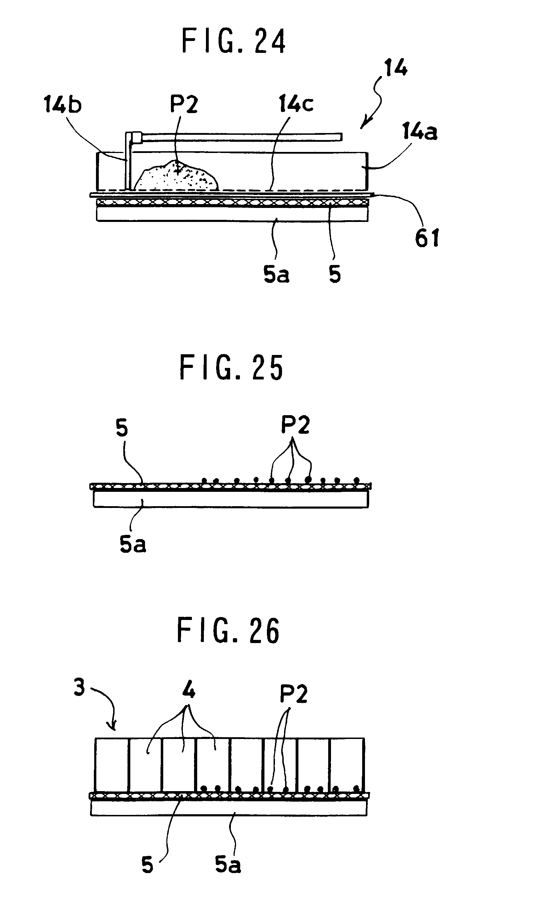

As shown in FIG. 23, a sheet of mask 61 having a constant thickness is used as the measuring body 6 and disposed on an air permeable member 5 of nonwoven fabric placed on a bottom panel 5a. Ornamental particles P2 are supplied onto the mask 61 using, for example, a squeegee 14 that comprises a box body 14a, a scraper 14b and a net forming the bottom of the box body 14a. The ornamental particles P2 are inserted into the box body 14a placed on the mask 61 and screened out from the net 14c onto the mask 61 using the scraper 14b causing the ornamental particles P2 to abut against the net 14c as shown in FIG. 24. The mask 61 is formed with latent image-forming apertures 61a corresponding to a pattern M to be expressed. Since the mask 61 is in close contact with the net 14c, the ornamental particles P2 screened out by the scraper 14b are measured in an amount corresponding to the thickness of the mask 61 and deposited on the air permeable member 5 of nonwoven fabric as shown in FIG. 25. Thus, a latent image formed by the mask 61 is developed. A retainer 3 is then disposed on the air permeable member 5 of nonwoven fabric to form the state wherein the measured ornamental particles P2 are present in the particle-retaining spaces 4 of the retainer 3. Subsequently, the aforesaid steps including the step of supplying the base particles P1 are taken to produce a patterned shaped article 1.

In this modification, therefore, since the ornamental particles P2 can be arranged in the form of the pattern M by merely supplying the ornamental particles P2 onto the mask 61 used as the measuring body, the development can be achieved by a very simple constitution.

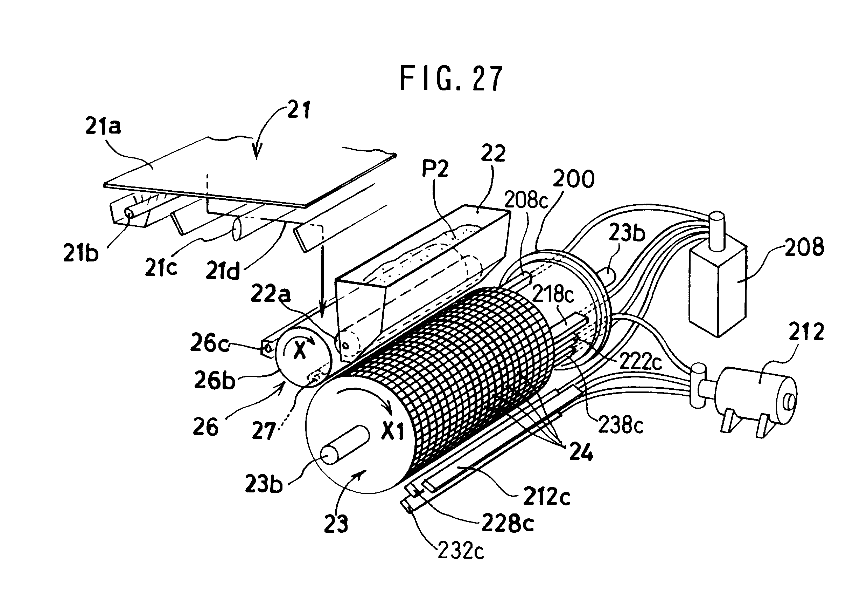

The second embodiment of the invention will be described hereinafter with reference to FIG. 27 to FIG. 30.

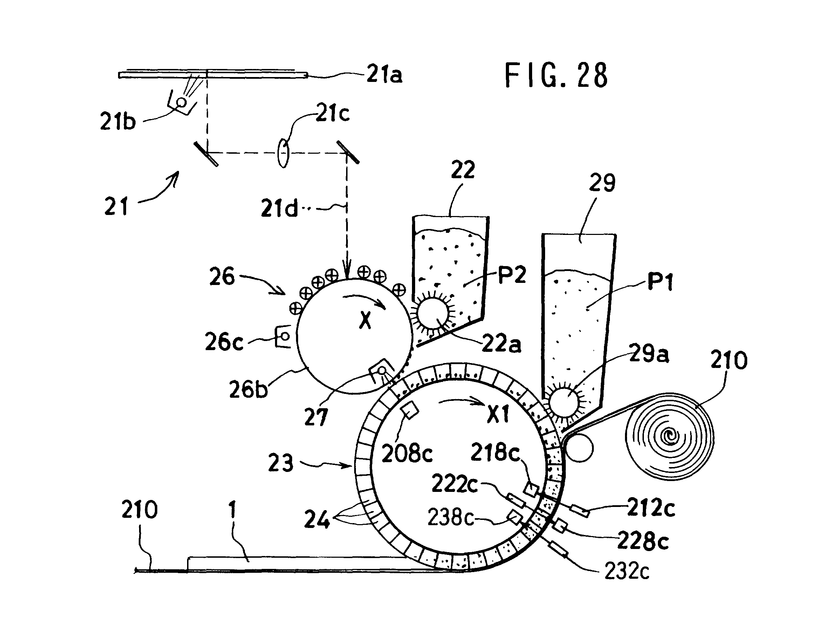

FIG. 27 is a perspective view showing the entire configuration of the second embodiment and FIG. 28 is a side view thereof.

While the first embodiment uses a combination of the flat measuring body 6 and the flat retainer 3 to produce a patterned shaped article 1, the second embodiment adopts a combination of a cylindrical measuring body 26 and a cylindrical retainer 23. However, the second embodiment is similar to the first embodiment in respect of the facts that the measurement of ornamental particles P2, formation of a latent image and development of the latent image are effected by the measuring body 26, that the fluidization and mixing of base particles P1 and the ornamental particles P2 are carried out by the retainer 23, and that the release of the particles from the retainer 23 forms a patterned shaped article 1.

The retainer 23 comprises a cylindrical cell form having its outer periphery formed with a plurality of particle-retaining spaces (cells) 24 that are arranged densely and its inner periphery made of an air permeable sheet, and a rotary shaft 23b provided on each end face of the cylindrical cell form. As is best shown in FIG. 28, inside the cylindrical cell form is provided a suction nozzle 208c for the ornamental particles P2, that is off to the upper left of the axis of the cylindrical cell form. Inside the cylindrical cell form, there are also provided two suction nozzles 218c and 238c substantially axially symmetrical with the suction nozzle 208c, and a jet nozzle 222c between the two suction nozzles 218c and 238c. On the other hand, outside the cylindrical cell form there are provided two jet nozzles 212c and 232c and a suction nozzle 228c therebetween, that face the inside suction nozzles 218c and 238c and the inside jet nozzle 222c, respectively, across the cylindrical cell form. Each of the suction and jet nozzles has the same number of ports as the cells in one axial row. The inside suction nozzles 208c, 218c and 238c and outside suction nozzle 228c are connected respectively to a suction device 208 via tubes. The inside jet nozzle 222c and outside jet nozzles 212c and 232c are connected respectively to an air supply device 212 via tubes. The tubes that connect the inside suction nozzles 208c, 218c and 238c to the suction device 208 and the jet nozzle 222c to the air supply device 212 are fixed to a support plate 200 with their tips fitted therein.

The measuring body 26 is disposed in the vicinity of the retainer 23 with an angle of 45° formed by a line interconnecting the centers of the retainer 23 and measuring body 26 and a horizontal line. The measuring body 26 is the one that can form a latent image utilizing the Carlson process. To be specific, the measuring body 26 uses a uniformly electrifiable, photo-conductive dielectric 26b to which uniform electrostatic charge is given by a corona discharge device 26c. A Latent image can be formed on the charged dielectric 26b by putting a pattern manuscript onto a glass plate 21 a of a scanner 21, using a light source 21b to irradiate the glass plate 21a from below, guiding the reflected light along a light path 21 d including a lens 21 c, and exposing the charged dielectric 36b to the reflected light. The exposed portion of the dielectric 26b is deprived of the electric charge, whereas the charged portion thereof becomes an electrostatic latent image that corresponds to the pattern.

A supply device 22 for ornamental particles P2 is off to the upper right of the axis of the dielectric 26b. When the dielectric 26b is rotated in the direction indicated by X in FIG. 27 and FIG. 28, the ornamental particle P2 supplied via a fur brush 22a from the supply device 22 adhere to the latent image on the dielectric 26b to complete the development. When the dielectric 26b is further rotated, the action of a corona discharge device 27 disposed at an inside position off to the lower right of the axis of the dielectric 26b releases the adhered ornamental particles P2 into the cells 24 of the retainer 23. In this case, the ornamental particles P2 can be efficiently supplied into the cells 24 if the suction nozzle 208c facing the corona discharge device 27 is positively utilized. An air-permeable sheet (not shown) is beforehand attached to the inner peripheral surface of the retainer 23 so that the introduced ornamental particles P2 can stay within the cells 24.

A series of these operations for forming a latent image, developing the latent image and supplying ornamental particles into the retainer are carried out once or plural times so that the ornamental particles P2 in an amount required for expressing a pattern can be supplied into the retainer 23. Thus, measurement and supply of the ornamental particles P2 have been completed.

As shown in FIG. 28, a supply device 29 for base particles P1 is off to the upper right of the axis of the retainer 23. The base particles P1 are supplied in a predetermined amount by the rotation of the retainer 23 in the X1 direction from the supply device 29 into the cells 24 into which the ornamental particles P2 have been supplied in the amount corresponding to the amount of the latent image. To be specific, a projection-bristling member 29a with a plurality of needle-like projections for quantitative supply of base particles P1 is provided at the outlet of the supply device 29, and the action of the needle-like projections enables a predetermined amount of base particles P1 to fall from the supply device 29 into the cells 24.

An air-permeable sheet 210 rolled up is then paid out synchronously with the rotation of the retainer 23 to cover the outer periphery of the retainer 23. The base particles P1 and ornamental particles P2 are fluidized and mixed efficiently within the cells 24 by blowing air from the jet nozzle 212c and sucking it into the suction nozzle 218c, then from the jet nozzle 222c into the suction nozzle 228c and finally from the jet nozzle 232c into the suction nozzle 238c. Upon completion of the three-stage fluidization and mixing of the particles P1 and P2 and separation of the air-permeable sheet 210 from the outer periphery of the retainer 23, the mixed particles are released from the retainer 23 onto the air-permeable sheet 210, thus obtaining a patterned shaped article before application of pressure.

In this embodiment as described above, since both the measuring body 26 and the retainer 23 are cylindrical, the apparatus is made compact as a whole.

Furthermore, since a pattern is read using the scanner 21 and the subsequent steps can be taken continuously, automation is possible over the entire process to highly efficiently produce patterned shaped articles without requiring many hands.

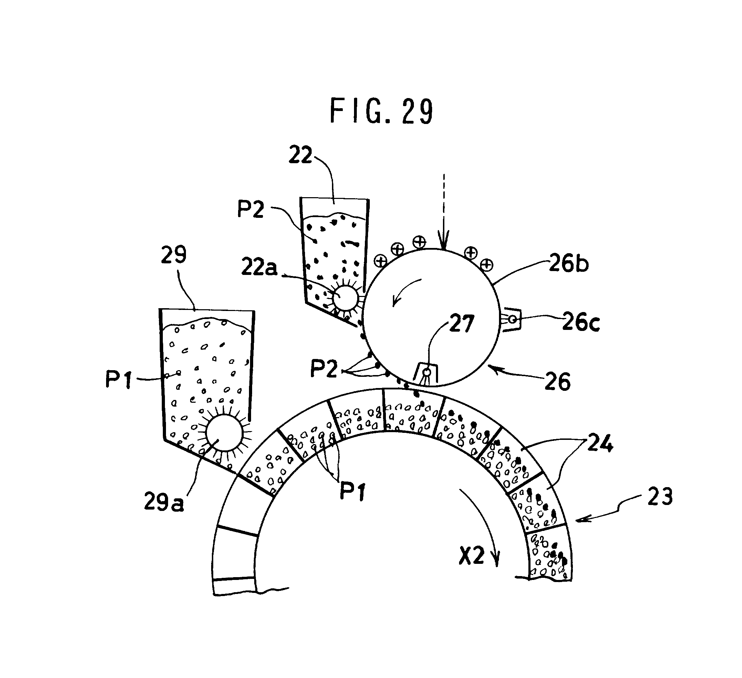

This embodiment has been described in the case where the ornamental particles P2 are first supplied and the base particles P1 are then supplied into the cells 24 of the retainer 23. However, the supplying order can be changed by adopting a configuration of FIG. 29 in which the base particle supply device 29 and ornamental particle supply device 26 are respectively disposed on the upstream and downstream sides relative to the rotation direction X2 of the retainer 23.

Direct supply of the ornamental particles P2 from the measuring body 26 to the retainer has been described in this embodiment. However, a configuration attaining indirect supply of the ornamental particles P2 can be adopted. In this case, the particles P2 are once transferred onto a sheet of nonwoven fabric, paper, etc. and the transferred particles P2 are then supplied into the retainer 23.

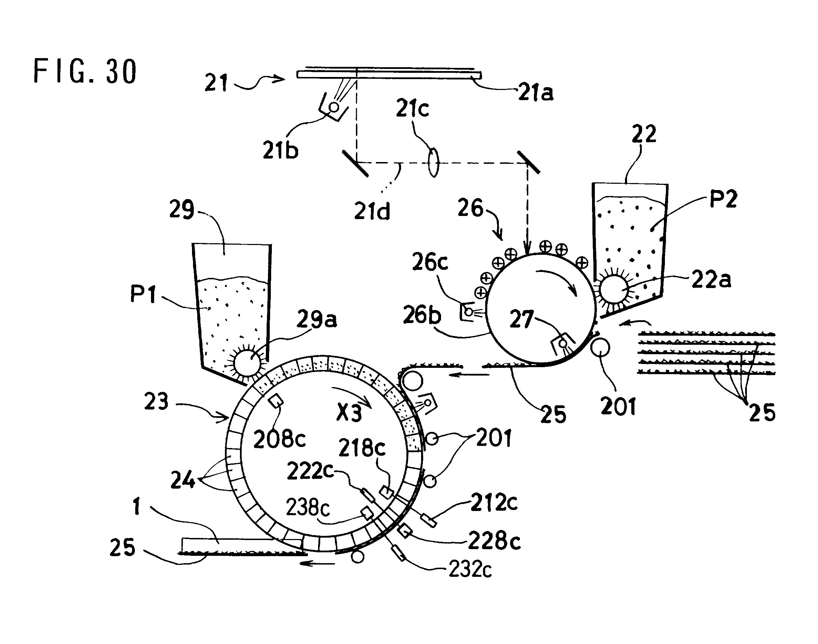

The indirect supply of the ornamental particles P2 will be described with reference to FIG. 30. The elements identical with or similar to those in FIGs. 28 and 29 are given the same reference numerals and omitted from the description.

In the modification of FIG. 30, a predetermined distance is set between a retainer 23 and a measuring body 26. A Latent image is formed on a dielectric 26b by corona discharge and light irradiation. The latent image is developed on the dielectric 26b using ornamental particles P2. The developed image of ornamental particles P2 is transferred onto a sheet of nonwoven fabric 25 by corona discharge. A series of these operations for forming a latent image, developing the latent image and transferring the developed image onto the nonwoven fabric sheet 25 are carried out once or plural times so that the ornamental particles P2 in an amount required for expressing a pattern can be supplied onto the nonwoven fabric sheet 25. Thus, measurement and supply of the ornamental particles P2 have been completed.

The nonwoven fabric sheet 25 onto which the ornamental particles P2 have been transferred is guided to the outer periphery of the retainer 23 by means of a roller 201. The nonwoven fabric sheet 25 serves as a cover for particle-retaining spaces (cells) 24 into which base particles P1 have been supplied beforehand. By rotation of the retainer 23 in the direction of X3 indicated in FIG. 30, the nonwoven fabric sheet 25 is rotated in the same direction while abutting against the outer periphery of the retainer 23. Air is blown toward the sheet 25 at predetermined locations to cause the ornamental particles P2 transferred onto the sheet 25 to enter the cells 24 and be admixed with the base particles P1 within the cells 24. Thus, the ornamental particles P2 are indirectly supplied into the cells 24 via the nonwoven fabric sheet 25.

Since the ornamental particles P2 are once transferred onto the nonwoven fabric sheet 25, the steps up to the transferring step are carried out separately from the following steps. This enables each step to be managed infallibly.

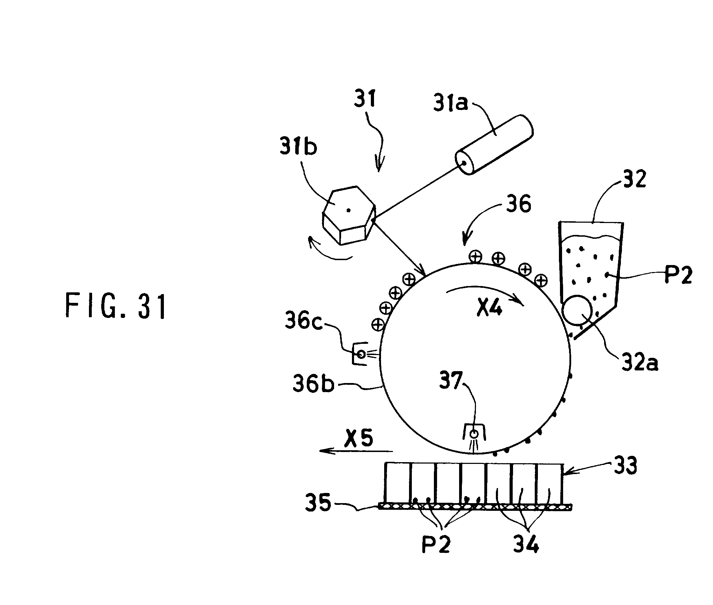

FIG. 31 is an explanatory view showing the third embodiment of the present invention. This embodiment uses a combination of a cylindrical measuring body 36 and a flat retainer 33 to produce a patterned shaped article. The flat retainer 33 is a honeycomb-shaped one similar to that shown in FIG. 3. In this embodiment, similarly to the first and second embodiments, steps of forming a latent image, developing the latent image and measuring ornamental particles P2 are effected using the measuring body 36, and the steps of fluidizing and mixing the ornamental particles P2 and base particles P1 are carried out within the retainer 33.

To be specific, the measuring body 36 is closely above the retainer 33. It is adapted to form a latent image according to the Carlson process similarly to the second embodiment and uses a uniformly electrifiable, photoconductive drum-like dielectric 36b to which uniform electrostatic charge is given by a corona discharge device 36c. A latent image can be formed on the charged dielectric 36b by using a scanner (not shown) to read a pattern, sending corresponding pattern data to a laser oscillator 31a where the pattern data are converted into laser beams, guiding the laser beams are guided onto the dielectric 36b via a polygonal mirror 31b to expose the dielectric 36. The exposed portion of the dielectric 36 is deprived of the electric charge, whereas the charged portion thereof becomes an electrostatic latent image corresponding to the read pattern. There may be adopted a configuration such that the pattern data read by the scanner can be stored in a memory of a computer. In this case, the computer can be utilized to process the pattern data into various forms before being converted into laser beams. Further, a LCD (liquid crystal display), LED (light emitting diode) or the like can be utilized instead of the laser oscillator 31b to effect exposure. Moreover, various optical printing technologies can also be utilized.

A supply device 32 for ornamental particles P2 is disposed at a position off to the upper right of the axis of the dielectric 36b. When the dielectric 36b rotates in the direction of arrow X4 indicated in FIG. 31, the ornamental particles P2 supplied from the supply device 32 via a magnetic brush 32a are attached to the latent image to complete the development of the latent image. The attached ornamental particles P2 are caused to fall, by the action of a corona discharge device 37 during further rotation of the dielectric 36b, into open cells 34 of the retainer 33 with its bottom covered with a nonwoven fabric sheet 35.

A series of these operations for forming a latent image, developing the latent image and supplying ornamental particles into the retainer cells are carried out once or several times so that the ornamental particles P2 in an amount required for expressing a pattern can be supplied into the retainer cells. Thus, measurement and supply of the ornamental particles P2 have been completed.

The retainer 33 is then moved in the direction of arrow X5 indicated in FIG. 31, and the same procedures including the supply of the base particles P1 as in the aforementioned embodiments are taken to obtain a patterned shaped article.

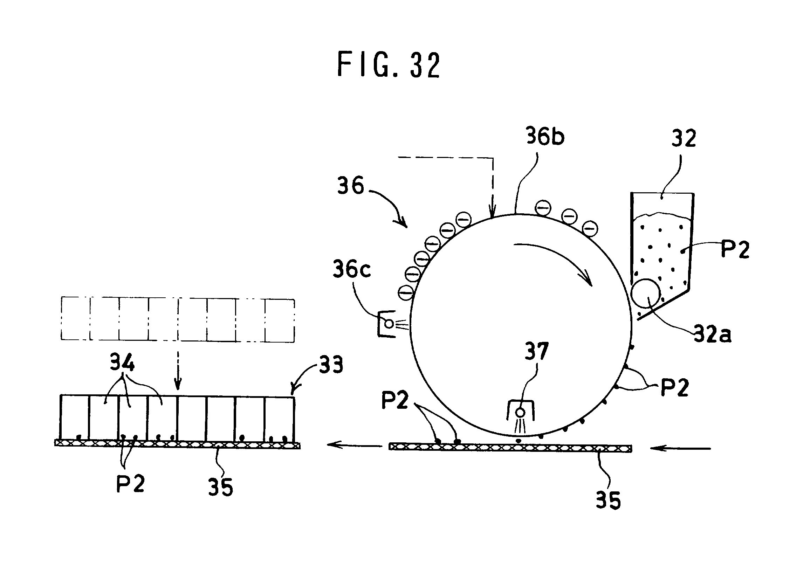

Although, in the third embodiment, the ornamental particles P2 are supplied from the measuring body 36 directly into the retainer 33, this is by no means limitative. A configuration of FIG. 32 attaining indirect supply of ornamental particles P2 can be adopted instead, in which the ornamental particles P2 are transferred onto a sheet of nonwoven fabric 35 by means of corona discharge, the nonwoven fabric sheet 35 is moved to a position, and a retainer 33 is placed on the nonwoven fabric sheet 35, resulting in that the ornamental particles P2 are accommodated in cells 34 of the retainer 33. In place of the nonwoven fabric sheet 35, other air-permeable sheets including a sheet of paper can be used.

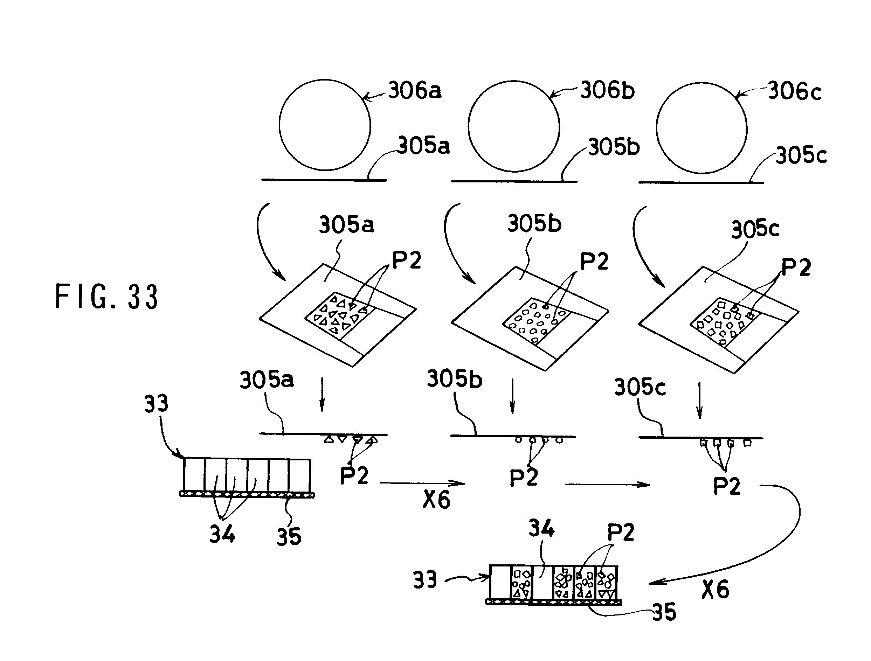

FIG. 33 is a schematic view showing another example that can attain indirect supply of ornamental particles P2. The elements identical with or similar to those in FIG. 31 are given the same reference numerals and the description thereof is omitted.

In FIG. 33, disposed above a retainer 33 are plural (three herein) measuring bodies 306a, 306b and 306c on which the same latent image has been developed with different kinds of ornamental particles P2. These different kinds or ornamental particles P2 are transferred from the measuring bodies 306a, 306b and 306c onto transfer sheets 305a, 305b and 305c, respectively. These transfer sheets are then turned upside down. The different kinds of ornamental particles P2 attached to the transfer sheets thus turned upside down are caused to fall, by applying corona discharge or vibration to the transfer sheets when the retainer 33 running in the direction of arrow X6 indicated in FIG. 33 has reached immediately below each transfer sheet, into cells 34 of the retainer 33. Thus, the different kinds of ornamental particles P2 are indirectly supplied into the retainer 33 via the transfer sheets 305a, 305b and 305c.

Since a plurality of measuring bodies are used to measure different kinds of ornamental particles in this example, as described above, the measuring time can be made shorter than that in the case where one measuring body is used to measure different kinds of ornamental particles. In addition, since the measurement of different kinds of ornamental particles by the plural measuring bodies is independently made, there is no possibility of the different kinds of ornamental particles being admixed with each other, resulting in a desirable pattern expressed with exactitude.

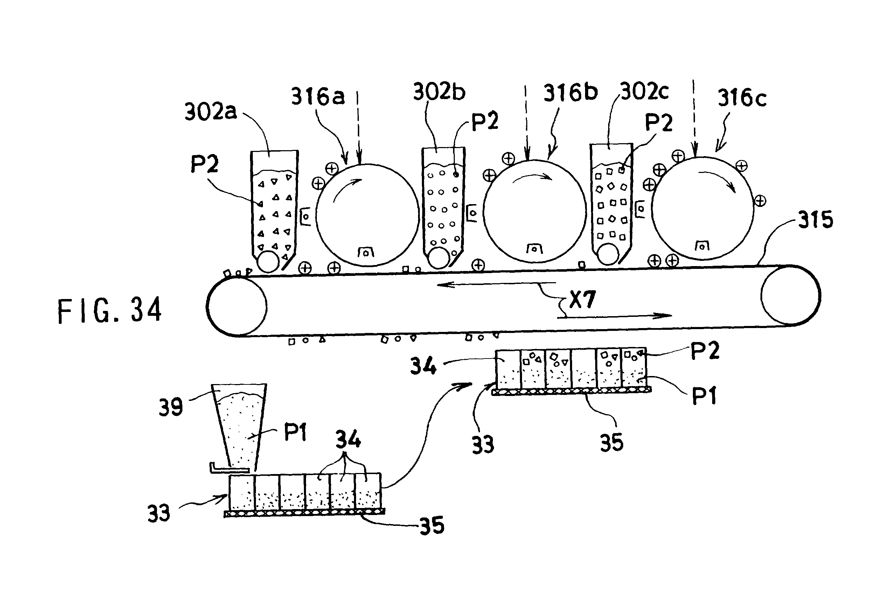

FIG. 34 is a schematic view showing still another example that can attain indirect supply of ornamental particles P2. The elements identical with or similar to those in FIG. 31 are given the same reference numerals and the description thereof is omitted.

In FIG. 34, measuring bodies 316a, 316b and 316c each comprise a drum-like dielectric similarly to the dielectric 36 shown in FIG. 31. In this example, a latent image formed on each of the measuring bodies 316a, 316b and 316c is electrostatically transferred by the charge-transfer method onto an endless-belt dielectric 315. When the endless-belt dielectric 315 advances in the direction of arrow X7 in FIG. 34, ornamental particles P2 supplied from supply devices 302a, 302b and 302c are attached to the transferred latent images on the endless-belt dielectric 315 to complete development of the latent images.

When the endless-belt dielectric 315 is further moved in the same direction, i.e. rotated in the counterclockwise direction, the ornamental particles P2 attached to the endless-belt dielectric 315 advance while being directed downward. When the ornamental particles P2 have reached the position of a retainer 33, the endless-belt dielectric 315 is abutted against the retainer 33 and the ornamental particles P2 are caused to fall into corresponding cells 34 of the retainer 33. Since base particles P1 have beforehand been supplied from a supply device 39 into the cells 34, falling of the ornamental particles P2 admixes themselves with the base particles P1.

A series of these operations for forming a latent image, transferring the latent image onto the endless-belt dielectric, developing the latent image and supplying ornamental particles into the retainer cells are carried out once or several times so that the ornamental particles P2 in an amount required for expressing a pattern can be supplied into the retainer cells. Thus, measurement and supply of the ornamental particles P2 have been completed.

The remaining procedures are taken in the predetermined order to produce a patterned shaped article. In this example as described above, the latent images are electrostatically transferred onto the endless-belt dielectric and the ornamental particles attached to the latent images on the endless-belt dielectric are supplied into the retainer. That is to say, indirect supply of the ornamental particles into the retainer is carried out using the endless-belt dielectric.

The transfer of a latent image can also be attained by any one of other means than the aforementioned charge-transfer method, including the method of TESI ( transfer of electrostatic image), ion flow method PIE (photoinduction electrochromism) method, PIP (persistent internal polarization) method, etc.

Thus, since this example adopts a configuration such that a plurality of measuring bodies are disposed above an endless-belt dielectric and that plural kinds of ornamental particles P2 are attached to corresponding portions of the endless-belt dielectric, the plural kinds of ornamental particles P2 can be continuously transferred to a retainer, making it possible to perform smooth transition from the measuring step to the particle supplying step.

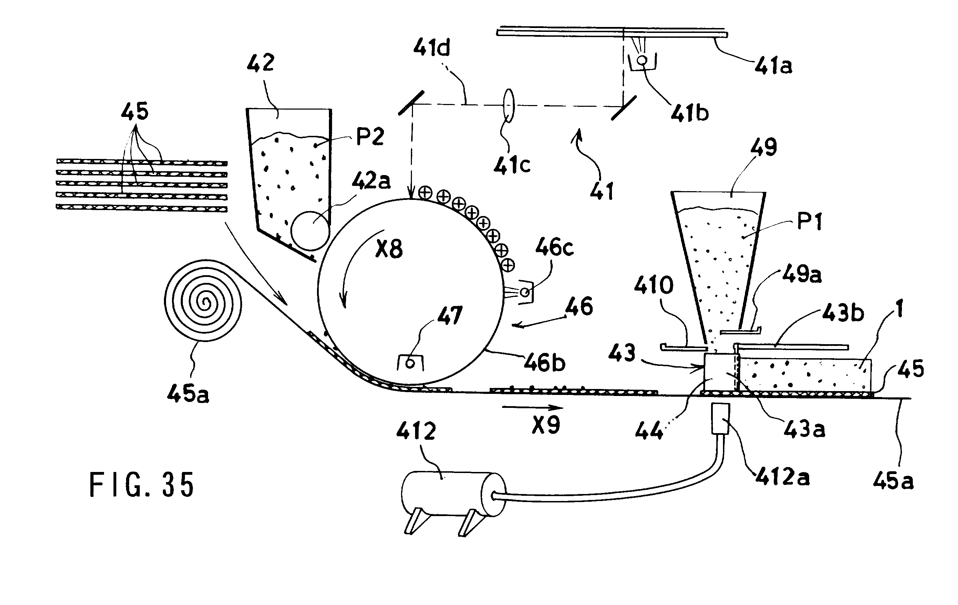

FIG. 35 is an explanatory view showing the fourth embodiment of the present invention. This embodiment uses a combination of a cylindrical measuring body 46 and a linear retainer 43 to produce a patterned shaped article 1. In this embodiment like the previous embodiments, the measuring body 46 is used to effect the steps of forming a latent image, developing the latent image and measuring ornamental particles P2, and the retainer 43 is used to fluidize and mix base particles P1 and the ornamental particles P2.

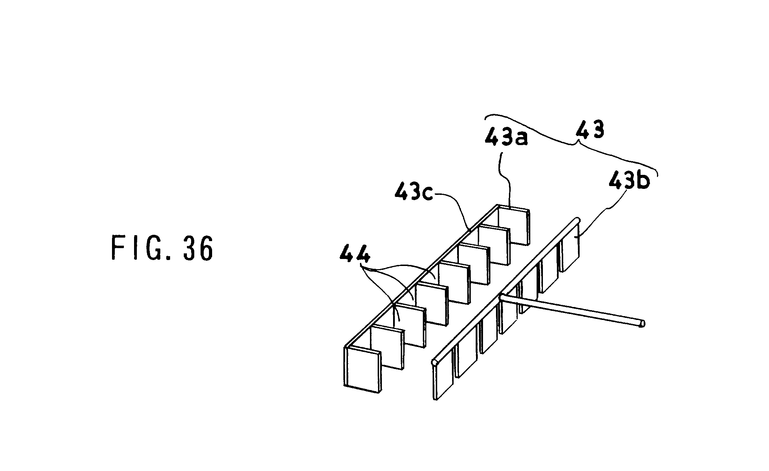

As shown in FIG. 35, the measuring body 46 is provided with a cylindrical drum-like dielectric 46. As is best shown in FIG. 36, the retainer 43 comprises a comblike retaining member 43a composed of a back wall 43c, two side walls and a plurality of partition walls of the retainer 43, and a rake-shaped movable member 43b constituting a divided front wall of the retainer 43.

The measuring body 46 in this embodiment is used to form a latent image utilizing the Carlson process similarly to that shown in FIGs. 27 and 28 and is provided with a uniformly electrifiable photoconductive dielectric 46b to which electrostatic charge is to be uniformly afforded by a corona discharge device 46c. A latent image can be formed on the charged dielectric 46b, similarly to the case shown in FIGs. 27 and 28, by putting a pattern manuscript onto a glass plate 41a of a scanner 41, using a light source 41b to irradiate the glass plate 41a from below, guiding the reflected light along a light path 41d including a lens 41 c, and exposing the charged dielectric 46b to the reflected light. The exposed portion of the dielectric 46b is deprived of the electric charge, whereas the charged portion thereof becomes a latent image corresponding to the pattern.

A supply device 42 for ornamental particles P2 is disposed at a position off to the upper left of the axis of the dielectric 46b. When the dielectric 46b is rotated in the direction indicated by arrow X8 in FIG. 35, the ornamental particles P2 supplied via a fur brush 42a from the supply device 42 adhere to the latent image on the dielectric 46b to develop the latent image. Then, the dielectric 46b further rotates while winding therearound both a sheet of nonwoven fabric 45 of stacked sheets of nonwoven fabric and a air-permeable sheet 45a paid out from its roll. The ornamental particles P2 adhering to the latent image on the dielectric 46b are once transferred onto the nonwoven fabric sheet 45 by a corona discharge device 47.

A series of these operations of forming a latent image, developing the latent image and transferring ornamental particles onto a nonwoven fabric sheet are carried out once or several times to supply the ornamental particles onto the nonwoven fabric sheet in an amount required for expressing a pattern. Thus, the measurement and transfer of the ornamental particles are terminated. The nonwoven fabric 45 onto which the ornamental particles P2 have been transferred and which is placed on the air-permeable sheet 45a is conveyed in the direction indicated by arrow X9 in FIG. 35 and stopped at a predetermined position. At that position, the comblike retaining member 43a is caused to descend onto the nonwoven fabric sheet 45. Base particles P1 are then supplied in a predetermined amount from a supply device 49 into particle-retaining spaces 44 defined by the comblike retaining member 43a, rake-shaped movable member 43b and nonwoven fabric sheet 45. As a result, the base particles P1 are overlaid on the ornamental particles P2 within the particle-retaining cells 44.

Upon completion of supply of the base particles P1, a slidable lid 410 provided above the retainer 43 is used to close the upper opening of the retainer 43. Air is then blown toward the retainer 43 from below through a jet nozzle 412a of an air supply device 412. The blown air passes through the air-permeable sheet 45a and nonwoven fabric sheet 45 into the particle-retaining spaces 44, thereby fluidizing and mixing the base particles P1 and ornamental particles P2 within the particle-retaining spaces 44. This operation is carried out over one row of the particle-retaining spaces 44. The slidable lid 410 is then slid to open the top of the retainer 43, and the rake-shaped movable member 43b is raised, pushed forward and lowered into the mixed particles within the particle-retaining spaces 44 so that the rake-shaped movable member 43b contacts the back wall 43c of the retainer 43. In this state, the comblike retaining member 43a is raised to a position slightly higher than the mixed particles. The air-permeable sheet 45a is then moved in the direction of arrow X9 in FIG. 35. At this time the nonwoven fabric sheet 45 is moved together. This movement makes the one row of particle-retaining spaces 44 vacant. Upon completion of the treatment of the mixed particles on the one sheet of nonwoven fabric 45, the mixed particles are transferred onto a bottom plate (not shown) that is then brought into a frame (not shown) and subjected to treatments including pressure application in the prescribed order to produce a patterned shaped article 1 .

In this embodiment, as described above, since the linear retainer 43 is used, it is possible to make the retainer compact and lightweight, easily move the retainer to a desired position, and use the retainer even in a narrow space.

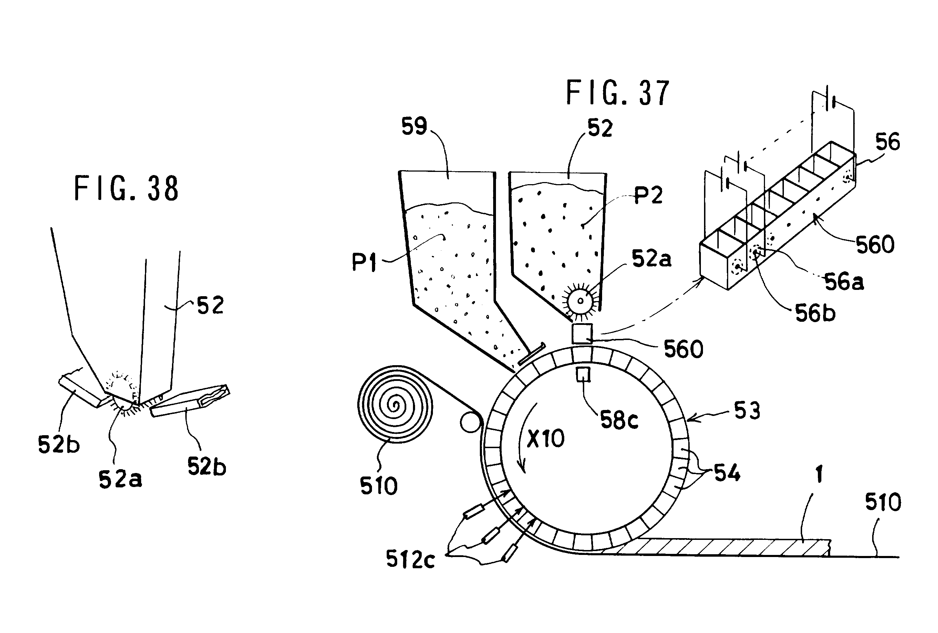

FIG. 37 is an explanatory view showing the fifth embodiment of the present invention. This embodiment uses a combination of a linear measuring body 56 and a cylindrical retainer 53 to produce a patterned shaped article 1. The linear measuring body 56 is used to effect electrification corresponding to a pattern to be expressed and measurement of ornamental particles P2, and the cylindrical retainer 53 is used to fluidize and mix the ornamental particles P2 and base particles P1.

The linear measuring body 56 comprises a plurality of continuous cells 560 arranged linearly, a pair of dielectrics 56a provided on the opposite inner walls of each cell and a pair of electrodes 56b provided on the same inner walls for electrifying the dielectric 56a. It is disposed immediately below the lower side of an outlet of a supply device 52 for the ornamental particles P2. Voltage is applied so that the cells 560 each have a predetermined potential difference, thereby giving a predetermined amount of positive or negative electric charge to each cell. The amount of electric charge is determined in view of the electric charge characteristic of the ornamental particles P2 .

The cylindrical retainer 53 is of the same type as that shown in FIG. 27 and FIG. 28.

The measurement of the ornamental particles P2 using the measuring body 56 is achieved by electrifying each cell 560 in accordance with a pattern to be expressed, and supplying the ornamental particles P2 into the cells 560 from the supply device 52 via a supply amount adjustable brush 52a. As shown in FIG. 38, this brush 52a comprises a disklike member and a plurality of needle-like projections attached to the disklike member. The ornamental particles in an amount required for expressing the pattern are separated from the brush 52a and attached to the dielectrics 56a of the cells 560.

The electrodes 56b are given a reverse potential or deprived of the potential already given to release the attached ornamental particles P2 from the dielectrics 56a. As a result, the ornamental particles P2 fall off and are supplied into particle-retaining spaces 54 of the retainer 53. The inner periphery of the retainer 53 is closed by an air-permeable sheet (not shown). The ornamental particles P2 can efficiently be supplied into the particle-retaining spaces 54 of the retainer 53 if a suction nozzle 58c disposed on the lower side of a particle-retaining space 54 as shown in FIG. 37 or blow nozzles 52b disposed on the opposite sides of the brush 52a as shown in FIG. 38 is or are used to effect air suction or air blow relative to a particle-retaining space 54.

A series of these operations of electrifying the cells, attaching ornamental particles to the dielectrics of the cells and supplying the ornamental particles into the particle-retaining spaces are carried out once or several times to supply the ornamental particles into the particle-retaining spaces in an amount required for expressing a pattern. Thus, measurement and supply of the ornamental particles are completed.

A supply device 59 for base particles P1 is disposed at a position off to the upper left of the axis of the retainer 53. When the retainer 53 is rotated in the direction indicated by arrow X10 in FIG. 37, the base particles P1 are supplied in a predetermined amount from the supply device 59 into the particle-retaining spaces 54 into which the ornamental particles P2 have been supplied. An air-permeable sheet 510 rolled up is paid out in synchronous with the rotation of the retainer 53 so that it covers part of the outer periphery of the retainer 53, and air is blown toward the covered periphery of the retainer 53 from three stages of jet nozzles 512c disposed at positions off to the lower left of the axis of the retainer 53. This enables the base particles P1 and ornamental particles P2 to be fluidized and admixed with each other. Upon separating the sheet 510 from the outer periphery of the retainer 53, the mixed particles are released from the retainer 53 and placed on the sheet 510 in the form before being press-formed into a patterned shaped article 1.

In this embodiment, as described above, since the linear measuring body 56 is used, it is possible to make the measuring body compact and lightweight, easily move the measuring body to a desired position, and use the measuring body in a narrow space. In addition, easy movement of the measuring body can fully comply with a retainer having a multiplicity of particle-retaining spaces.

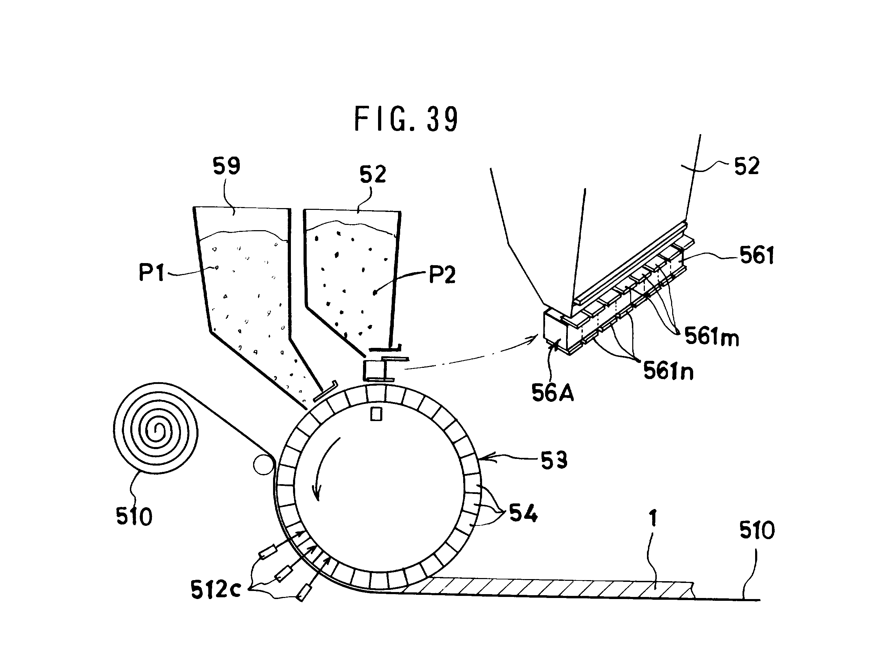

FIG. 39 is an explanatory view showing a modification of the fifth embodiment shown in FIG. 37. The elements identical with or similar to those shown in FIG. 37 are given the same reference numerals and the description thereof is omitted. In this modification, the measuring body 56 of FIG. 37 comprising a combination of the plurality of continuous cells 560 arranged linearly and the plurality of dielectrics 56a is modified into a measuring body 56A comprising a combination of a plurality of continuous cells 561 arranged linearly and the same number of upper gates 561m and lower gates 561n that can open and close the upper and lower openings of the cells 561, respectively.

The measuring body 56A is disposed immediately below the lower side of an outlet of a supply device 52 for ornamental particles P2 in the same manner as in the embodiment of FIG. 37. The ornamental particles P2 are measured using the measuring body 56A by opening the upper gates 561m with predetermined aperture depending upon a pattern to be expressed while fully closing the lower gate 561n, supplying the ornamental particles P2 from a supply device 52 successively into the cells 561, and closing the upper gates 561m. The lower gates 561n are then opened to supply the ornamental particles P2 into particle-retaining spaces 54 of a retainer 53, and the subsequent operations are carried out in the same manner as in the embodiment of FIG. 37 to produce a patterned shaped article 1.

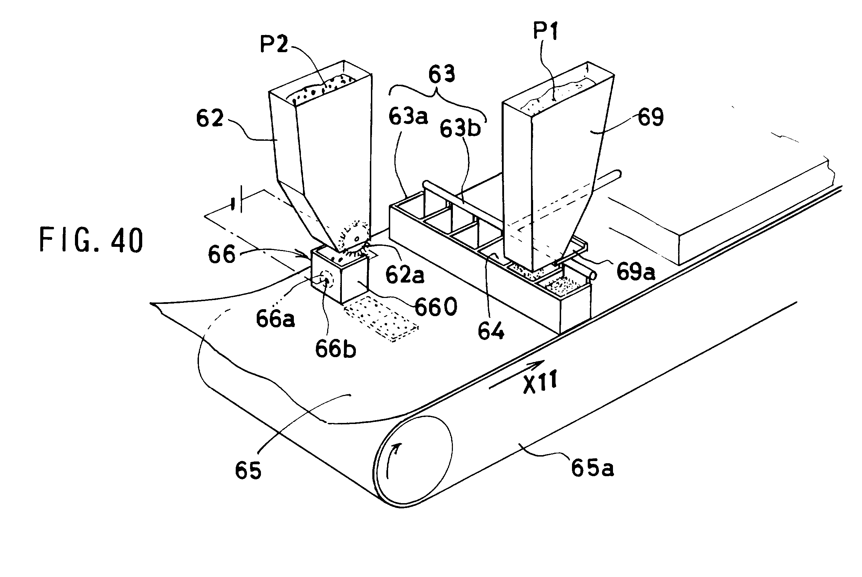

FIG. 40 is an explanatory view showing the sixth embodiment of the present invention. This embodiment adopts a combination of a uni-cell formed measuring body 66 and a linear retainer 63 to produce a patterned shaped article. The measuring body 66 is used to effect electrification corresponding to a pattern to be expressed, measurement of ornamental particles P2 and development on a sheet of nonwoven fabric 65. The retainer 63 is used to fluidize and admix base particles P1 and the ornamental particles P2. The measuring body 66 comprises a uni-cell 660, a pair of dielectrics 66a formed on the inside opposite walls of the uni-cell 660 and a pair of electrodes 66b formed on the same walls for giving electric charge to the dielectrics 66a. Voltage is applied to the electrodes 66b to give rise to a predetermined potential difference to afford a predetermined amount of positive or negative electric charge to the dielectrics 66a. The amount of electric charge is determined in view of the electric charge characteristic of the ornamental particles P2. The measuring body 66 is disposed immediately below the lower side of an outlet of a supply device 62 for the ornamental particle P2.

The retainer 63, like that 43 shown in FIG. 36, is of a linear type comprising a comblike retaining member 63a and a rake-shaped movable member 63b.

The ornamental particles P2 are measured using the measuring body 66 by setting the uni-cell 660 in position corresponding to the position of the pattern, giving electric charge to the uni-cell 660, supplying the ornamental particles P2 into the uni-cell 660 from the supply device 62 via a supply amount adjustable brush 62a to attach the supplied ornamental particles P2 to the dielectrics 66a. The electrodes 66b are given reverse potential or deprived of the potential already given to release the attached ornamental particles P2 from the dielectrics 66a. As a result, the ornamental particles P2 fall onto and are attached to the sheet of nonwoven fabric 65 on an air-permeable endless belt 65a.

A series of these operations of affording the reverse potential, attaching the ornamental particles and causing the ornamental particles to fall onto the sheet of nonwoven fabric are carried out once or several times to supply the ornamental particles in an amount required for expressing the pattern onto the sheet of nonwoven fabric. The series of operations are carried out while the ornamental-particle supply device 62 and measuring body 66 are moved together until the pattern is expressed. The endless belt 65a is moved in the direction indicated by arrow X11 in FIG. 40 to carry the sheet of nonwoven fabric 65 to which the ornamental particles P2 have been attached to a predetermined position.

At that position, similarly to the embodiment of FIG. 35, the comblike retaining member 63a is caused to descend onto the nonwoven fabric sheet 65 and then base particles P1 are supplied in a predetermined amount from a supply device 69 provided above the retainer 63 into particle-retaining spaces 64 defined by the comblike retaining member 63a, rake-shaped movable member 63b and nonwoven fabric sheet 65. As a result, the base particles P1 are overlaid on the ornamental particles P2 attached to the nonwoven fabric sheet 65 within the particle-retaining spaces 64. These particles are fluidized and admixed with each other in the same manner as in the embodiment of FIG. 35 to produce a patterned shaped article 1.

As described above, since this embodiment uses the combination of uni-cell formed measuring body 66 and linear retainer 63, both the measuring body 66 and the retainer can be made compact and lightweight, resulting in a smaller device as a whole. Furthermore, since the measuring body 66 comprises a single cell, it can easily be moved and is applicable to the case where a pattern is to be expressed on a wide surface.

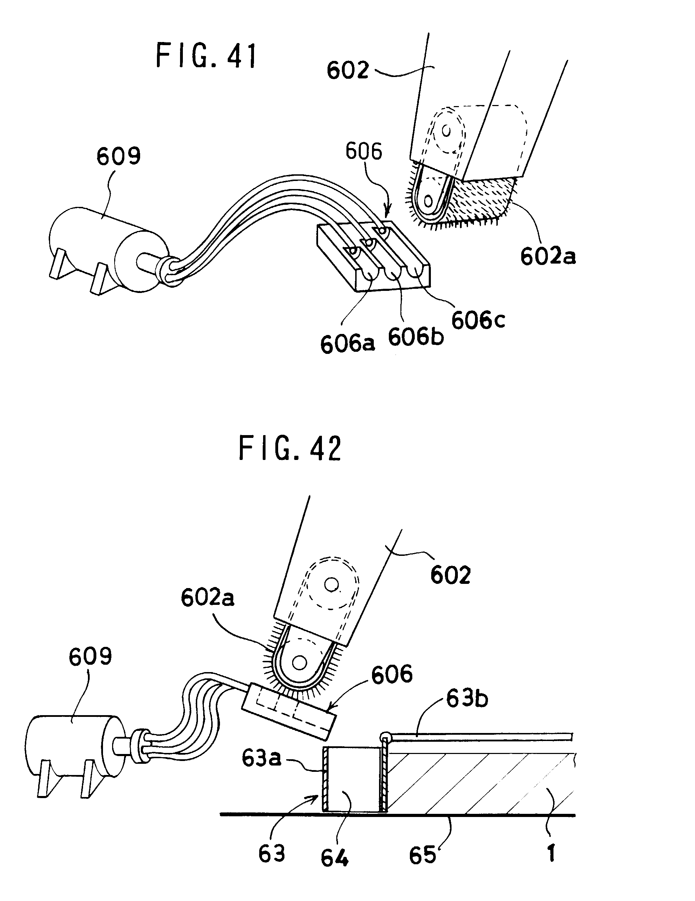

FIG. 41 shows another example of measuring body 606 and another example of supply device 602 for ornamental particles P2, both usable in the embodiment of FIG. 40. The measuring body 602 comprises a block body having three channels 606a, 606b and 606c of different volumes. The supply device 602 is provided with a rotary brush 602a.

The ornamental particles P2 are measured using the measuring body 606 by setting the measuring body 606 in position corresponding to the position of a pattern, disposing the measuring body 606 aslant above the retainer 63 as shown in FIG. 42, supplying the ornamental particles P2 from the supply device 602 into the channels 606a, 606b and 606c, using the rotary brush 602a to level the upper surface of the ornamental particles P2 within the channels to make the amount of the ornamental particles within each channel equal to the volume of the corresponding channel, selecting one of the channels in accordance with the amount of the ornamental particles P2 to be supplied, and using air from an air supply device 609 to supply the ornamental particles P2 within the selected channel into a particle-retaining space 64 of the retainer 63. The following operations including supply of base particles P1 are carried out in the prescribed order to produce a patterned shaped article 1.

In the embodiments and modifications so far described, ornamental particles P2 ornament base particles P1 and in a finished state differ in color, luster, texture, taste, perfume and function from the base particles P1. Examples of the ornamental particles P2 include various kinds of particles of pigments, colorants, ores, supernatant agents, suspending agents, shrinking agents, inflating agents, fermentative materials, ferment bacilli, perfumy materials, spices, seasonings, edibles, electro-conductive materials, electro-inductive materials, magnetic materials, non-magnetic materials, magneto-permeable materials, magneto-shielding materials, light-emitting materials, fluorescent materials, surfactants, light-permeable materials, light-shielding materials, other chemical materials, other functional materials, etc. It is not decided. but arbitrary case by case whether the ornamental particles P2 to be used are electro-conductive or electro-inductive. In addition, a binder can be used to firmly bind the ornamental particles together or loosely bind them together so that they are readily amenable to pulverization. Furthermore, in order to adjust electric charge of the ornamental particles P2, a charge-controlling agent can be added in advance or subsequently. Further, while the ornamental particles used are not limited to toner of a one-component system or a carrier-containing toner of a two-component system, magnetic toner of a one-component system can be used advantageously in producing a patterned shaped article of ceramic or concrete.

The base particles P1 preferably have a size not more than one half the size of a particle-retaining space of the retainer to be used in order to fluidized and admixed with the ornamental particles P2. In order for the base particles P1 to be efficiently fluidized and admixed with the ornamental particles P2 within the particle-retaining space, however, the size thereof is more preferably not more than one third the size of the particle-retaining space. Although the size of the ornamental particles P2 may be as large as that of the base particles P1, it is preferably smaller than that of the base particles P1. In addition, although the base particles P1 are dry, they may have absorbed some moisture if it is not kneaded with water, oil, lubricant-bonding agent, solvent, setting agent or plasticizer and is in a state readily amenable to pulverization before being supplied into a particle-retaining space. If the base particles P1 and ornamental particles P2 should contain water, oil, lubricant-bonding agent, solvent, setting agent, plasticizer, surfactant, etc., it will be preferable for these particles to have dry surfaces not coated with a liquid membrane so that they can be fluidized and admixed.

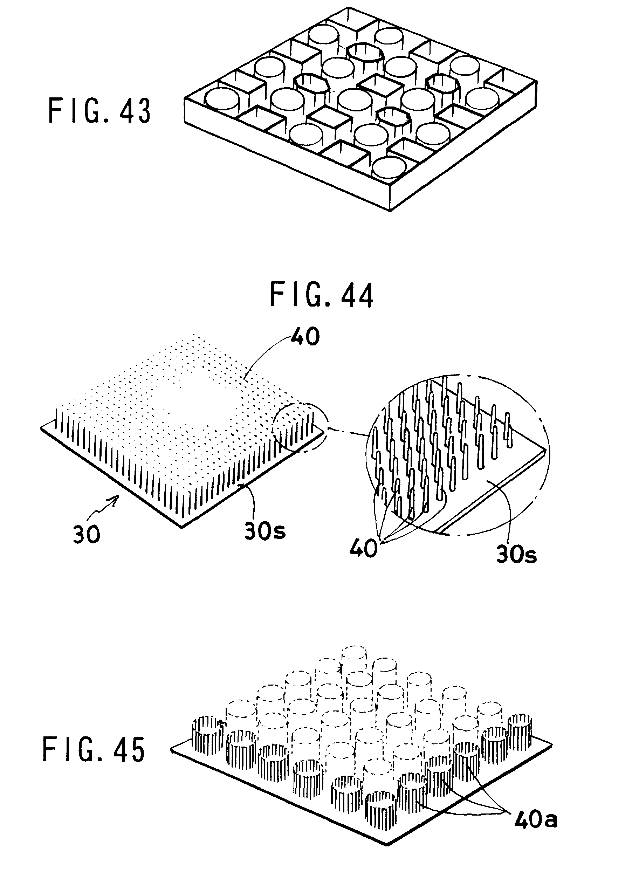

In the embodiments and modifications described so far, a retainer can be made of any material, that is hard enough to partition and retain base particles P1 and ornamental particles P2, such as metal, ceramic, plastic, rubber, paper, wood, nonwoven fabric, woven fabric, knit fabric, etc. When a cell form having a plurality of cells closely arranged densely is used as the retainer, it can be made of metal, plastic, paper, rubber, wood, woven fabric, knit fabric, nonwoven fabric, etc. The cells may have any lateral cross section including a circle, rectangle, polygon, heart shape, asterisk, etc. One example of the cell form is shown in FIG. 43 in which it has a plurality of cells of various shapes.

A projection bristling form 30 shown in FIG. 44 can be used as the retainer in place of the aforementioned cell form. It comprises a support member 30s and a plurality of projections 40 bristling from the support member 30s. The support member 30s may be a plate of metal, wood, etc., or a sheet of plastic, rubber, paper, woven fabric, knit fabric, nonwoven fabric, etc., or a net of any of these. Examples of the projections 40 include pins, pieces, pipes, pile or loops formed by knitting or weaving, standing fibers that can be of the implanted, raised or attached type. Standing fibers of implanted, raised or attached type, pile or loops, or pins are arranged into a ring-shaped projection 40a and a plurality of such ring-shaped projections 40a can be formed into a projection-bristling form as shown in FIG. 45.

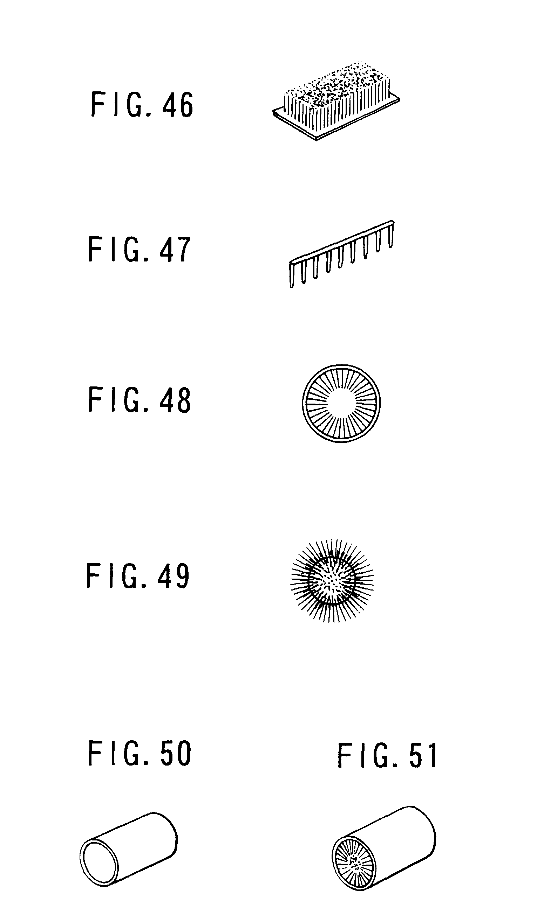

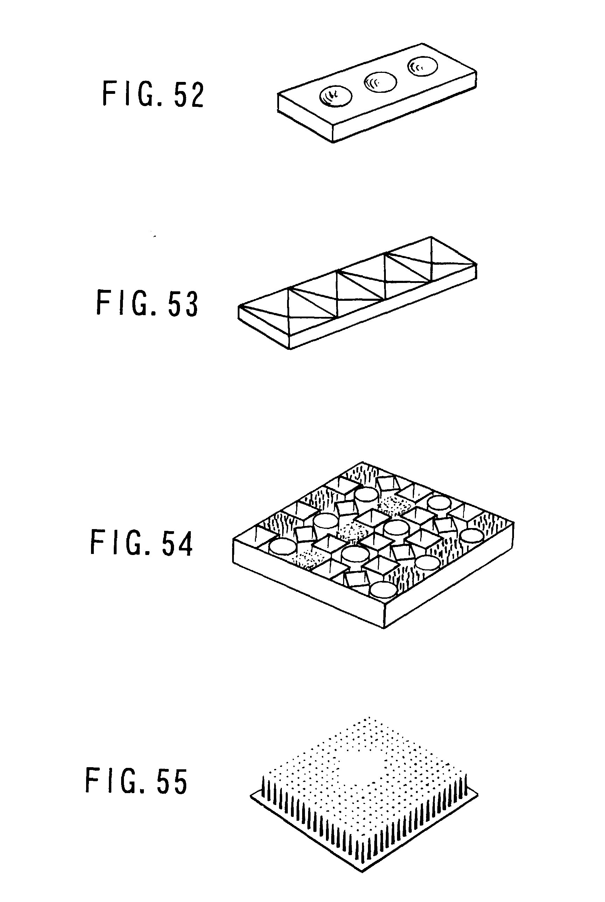

In the embodiments and modifications described so far, a dielectric of a measuring body can be made of plastic, metal, ceramic, etc. or a combination of two or more of these. It is optional whether the dielectric has photo-conductivity. The dielectric may be of any shape including a plate or sheet of paper, woven fabric, knit fabric, nonwoven fabric, plastic net, plastic sponge, etc., may be subjected to coating or impregnation and may be of a flat, cylindrical, linear, dot (uni-cell) type or the like. Examples of the linear or dot type dielectrics include a brush one shown in FIG. 46, a comber (slitted) one shown in FIG. 47, a ring brush one shown in FIG. 48, a ball brush one shown in FIG. 49, a cylindrical one shown in FIG. 50, and a cylindrical brush one shown in FIG. 51. Other examples of dielectrics include a pivot holder shown in FIG. 52, a retroreflector plate shown in FIG. 53, a cell form with nets, combers and brushes shown in FIG. 54 and a projection-bristling form shown in FIG. 55. A dielectric can be used solely or in combination with electro-conductive material.

Photo-conductive photosensitive material used for the dielectric 26b shown in FIG. 27 etc. is roughly divided into inorganic conductive material and organic conductive material. Examples of the inorganic conductive material includes various kinds of Se's, CdS's, ZnO's amorphous silicone, etc. As a combination of inorganic conductive material and organic conductive material, PVK (poly-N-vinyl carbazole)/Se can be cited. Any other combination can also be used.

The organic conductive material is represented by polyvinyl carbazole. Other high-molecular photo-conductive materials include polystyrene, polyvinyl xylene, poly-1-vinyl naphthalene, poly-2-vinyl naphthalene, poly-4-vinyl biphenyl, poly-9-vinyl anthracene, poly-3-vinyl pyrene, poly-3-vinyl quinoline, polyindene and polyacenaphthylene. Copolymers of any one of these and another monomer can also be used.

Polyvinyl carbazole added as a photo-sensitizing agent with coloring matter is advantageously used. Examples of the coloring matter for photo-sensitization include triphenyl methanes, xanthenes, azines, acridines, triazines, cyanins, azoes, etc. Electron acceptor compounds can be added as a photosensitizer to polyvinyl carbazole. Examples of the compounds include 2,5-dinitrofluorenone, 2-6-dinitrofluorenone, 3-6-dinitrofluorenone, 2,7-dinitrofluorenone, 2,4,7-trinitrofluorenone, 2,4,5,7-tetranitrofluorenone, 2,5-dinitrofluorene-MN, 2,6-dinitrofluorene-MN, 3-6-dinitrofluorene-MN, 2,4,7-tri-nitrofluorene-MN, 2,4,5,7-tetranitrofluorene-MN, 3-nitrofluorene-MN, fluorene-MN, benzophenone-MN, 2-p-toluenesulfonamidofluorene-MN, 1,3,7,9-tetranitrodibenzosuberone, 1,3,5-trinitrobenzene, p-benzoquinone, 1,4-naphthoquinone, 9,10-anthraquinone, 3,3',5,5'-tetramethyldiphenoquinone, o-chloranil, p-chloranil, 2-dicyano-methylene-1,3-indanedione, 2,3-dichloro-5,6-dicyano-p-benzoquinone, tetracyano-ethylene, and 7,7,8,8-tetracyanoquinodimethane.

Of these organic conductive materials, low molecular material is represented by a resultant obtained by dispersing and making-compatible acylhydrazone derivatives, pyrazoline derivatives, benzthiazole derivatives, oxadiazole derivatives, imidazothione derivatives, benzoxazole derivatives, triazole derivatives, benzimidazole derivatives, polyvinyl-carbazole, etc. in a binder resin such as a styrene-butadiene copolymer, silicone resin, styrene-alkyd copolymer, polyvinyl chloride, polyvinylidene chloride, copolymer of vinylidene chloride and acrylonitrile, copolymer of vinyl acetate and vinyl chloride, polyvinyl acetal, polyester methacrylate, polystyrene, polyester, phenol-formaldehyde resin, ketone resin, polyamide, polycarbonate, etc. The resultant added with a sensitizer can also be used.

As for different low-molecular organic photo-conductive material, pigment-dispersed photo-conductive material having a pigment dispersed in a binder can be cited.

As for applied low-molecular organic photo-conductive material, there can be cited an eutectic complex photosensitizer, a multilayer photosensitizer, etc. that can also be used in the present invention.

When using the injection sensitization method, the photosensitizer is separated into a charge generation (CG) layer and a charge transport (CT) layer to enhance the characteristics thereof.

Examples of CT agents used for the Ct layer include various kinds of electron donor compounds and electron acceptor compounds, such as hydrazone compounds, pyrazoline compounds, oxazole compounds, oxadiazole compounds, triphenylamine compounds, stilbene compounds, butadiene compounds, etc.

Examples of CG agents used for the CG layer include photo-conductive organic pigments such as azo pigments, bis-azo pigments, tris-azo pigments, perillene pigments, phthalocyanine pigments, etc., sodium squalium, sodium azulenium, etc.

The latent image-forming methods using light include (1) the Carlson process defined as image blanking of uniform electric charge by photo-conductivity, (2) the photo-polarization method such as an electrostatic capacity imaging method, a reverse field process, a PIP (persistent interval polarization) method defined as latent image formation by photo-polarization or photo-depolarization, (3) the charge-transfer method defined as bulk conductive latent image formation by photo-conductivity and forming an electrostatic latent image on a sheet of electrostatic recording paper, nonwoven fabric, etc. clamped between a transparent electrode and a dielectric, (4) the ion flow method, (5) the barrier modulation method defined as optical destruction or production of a junction barrier, and (6) the organic memory coating method defined as conductive image manifestation by a photochemical reaction. Any one of these can be adopted.

The latent image conversion methods include (a) the charge-transfer method that converts an electrokinetic latent image into an electrostatic latent image, (b) the TESI method or ion flow method that converts an electrostatic latent image into another electrostatic latent image, (c) the PIE method that converts an electrokinetic latent image into another electrokinetic latent image, and (d) the PIP method that converts an electrostatic latent image into an electrokinetic latent image. In addition, the PIP electrostatic scanning probe readout method can also be used. Any one of these can be adopted.

Developing methods making a latent image visible include the Carlson process using ornamental particles (toner) as a developing agent, and are roughly classified into a method for directly developing a latent image and an inversion developing method for developing an inversion portion (deprived of electric charge) of a latent image. Either of these methods can be adopted and may be combined with a development electrode method which is one of latent image intensifying methods. From another standpoint of view, developing methods are classified into that using a single element of ornamental particles and that using two elements of ornamental particles and a carrier.

The developing method using a single element is roughly classified into a method using a single magnetic element and a method using a single nonmagnetic element. The method using a single magnetic element includes an electrostatic conductive development system (a magneto-dynamic development system), a jumping development system, an FEED (floating electrode effect development) system a BMT (bipolar magnetic toner) system, etc. that are used as electrophotographic and printing techniques. The method using a single nonmagnetic element includes a fur-brush development system, a pressure application development system, an NSP development system (adopted by Ricoh Co., Ltd.), a touch-down development system, a projection development system, a powder-cloud development system, a charging development system, etc. that are used as electrophotographic and printing techniques.

The developing method using two elements includes the cascade developing method using a nonmagnetic carrier, paddle developing method, magnetic brush developing method including a fixed-magnet developing system and a rotary-magnet developing system (a micro-toning system), magnetic multistage brush developing method, multi-paralleled magnetic brush developing method including a multi-paralleled fixed magnetic brush developing system and a multi-paralleled rotary magnetic brush developing system, etc. that are used as electrophotographic and printing techniques. Any one of these can be adopted.

Developed image concentration control is carried out using the methods for controlling the concentrations of various kinds of ornamental particles, controlling various kinds of developing biases, and supplementing various kinds of ornamental particles. Any one of these methods can be adopted.

Exposing methods usable when a photo-conductive body is used as a dielectric include a method of effecting exposure in a dot unit using a laser beam, an LCD, an LED, etc. in addition to the electrophotographic method that gives incident light to a manuscript and forms an inversion image via a lens.

Devices for charging a dielectric include non-contact type devices that are of a corotron type, scorotron type, solid discharge element type, needle electrode type, etc. and contact type devices that are of a roller discharge type, conductive brush type, etc. Any one of these can be adopted. It is optional and can be determined as occasion demands whether electric charge to be given is positive or negative.

Methods for transferring ornamental particles to a retainer, a sheet of paper, nonwoven fabric, etc. include an electrostatic transfer method such as corona transfer, bias roller transfer, etc., a mechanical transfer method such as adhesion transfer, pressure transfer, etc., a magnetic transfer method, a combination electric field and ultrasonic vibration transfer method, etc. Any of these can be adopted. When the adhesion transfer method is adopted, it is to be modified so that adhesiveness can be maintained only at the time of transfer if it should adversely affect the subsequent fluidizing and admixing step.

The dielectric may be in the form of any of a sheet, belt, web, drum, plate, line and point. The form is not limitative. Further, there can be adopted either an electrostatic recording system using a photosensitive dielectric and light or an electron recording system (electrography) based on an electrostatic recording method that gives electric charge directly to a dielectric using an electric current, discharge, an electron beam, etc. A sheet of paper, nonwoven fabric, etc., a belt. etc. onto which a latent image is to be transferred can be used as a dielectric. It is optional what of the methods is to be used or how the methods are to be combined.

When a sheet of nonwoven fabric is used as a dielectric, for example, a coating may be applied to the nonwoven fabric sheet so that the surface thereof is made smooth. A nonwoven fabric sheet may be made of metallic fiber, carbon fiber or other conductive material so that it can be used as an electrode. The nonwoven fabric sheet of such material may be coated with a coating so that it can be used as a dielectric. Thus, a nonwoven fabric sheet can be used after treatment into various shapes. If a nonwoven fabric sheet is given various functions such as a shape memory effect etc., this is desirable because subsequent treatments including a washing treatment can be promoted to attain high-speed treatments. In this case, it is preferable that the nonwoven fabric sheet maintains its air-permeability so that the fluidizing and admixing step can be taken by air blow or suction and also maintains its bulkiness so that particle-retaining spaces of a retainer can clearly be partitioned.

The image forming optical system includes an analogue system of entire surface exposing type, slit exposing type, etc. for directly projecting a manuscript onto a photosensitive dielectric; a mechanical scanning system adopting a gas laser, LD (laser diode) etc treating a digital signal into which an image read using spot scanning methods that include cylinder scanning, prism fiber tube scanning, polygon mirror scanning, galvano-mirror scanning line/circle converting optical fiber scanning, rotation aperture scanning, various line scanning methods, various surface scanning methods, etc. is converted; and a solid scanning system using an LED, LCD, OFT (optical fiber tube), etc. for writing an image indirectly in a photosensitive dielectric. Any one of these systems can be adopted. These systems can be integrated into an electrophotographic technique or optical printing technique. Various electrophotographic techniques and various optical printing techniques can be utilized.

When adopting an electron recording system (electrography) based on an electrostatic recording method that gives electric charge directly to a dielectric using an electric current, discharge, an electron beam, etc. without using light, the aforementioned various spot, Line and surface scanning methods are used to convert an image into a digital signal and form the electrical amount of the digital signal into a pattern. Any one of these systems can be adopted.

Electrostatic recording is classified into a direct discharge system and an indirect discharge system. The direct discharge system includes a front surface control type, rear surface control type, two-surface control type and one-surface control type. The indirect discharge system includes a solid discharge type (by aperture control) and corona discharge type by aperture control or slit control. Any one of these can be adopted.

Electrostatic electrography further includes an electrostatic printer type using a needle electrode for recording, a videographic type using an electron beam, a zero printing system using a corona charger to electrify a master pate and effecting development and an electrostatic printing type using a screen stencil. Any one of these types can be adopted. A magnetic printing type utilizing magnetism can also be used.

Ornamental particles can be supplied from a measuring body to a retainer either directly or indirectly through transfer. In the case of indirect supply onto the retainer, ornamental particles can be transferred onto a dielectric, a conductive body or a combination dielectric and conductive body in the form of a sheet, plate, cylinder, etc. Any one of the members onto which ornamental particles are to be transferred can be adopted.

When adopting a zero-graphy or electrography to measure ornamental particles, an endless (cylindrical) measuring body is used or a plurality of flat measuring bodies are used to measure ornamental particles several times and supply them into the retainer. By thus making the frequency of using the measuring body or bodies larger than that of using the retainer (not 1 : 1 ) it is possible to express a pattern with a high concentration of ornamental particles or a precise pattern having a distribution of various concentrations of ornamental particles. Various pattern expressions can be attained when carrying out a method of expressing a shade of color when a latent image is developed using the zero-graphy or electrography and additionally carrying out a method of expressing a two-time shade of color. This is preferable. Also when adopting a linear measuring body, an expression method is carried out twice on the line while stopping the movement of the retainer to enable a twice amount of ornamental particles to be supplied into a particle-retaining space. This is desirable because various pattern expressions can be attained.

Positive or negative electric charge is given to base particles and opposite electric charge is given to ornamental particles. Since the base particles have a larger size than the ornamental particles, the ornamental particles are filled between the base particles. This is preferable because the ornamental particles attach to and cover the base particles.

When supplying ornamental particles into particle-retaining spaces of a retainer, the ornamental particles are accompanied with a flow of air, or a flow of ion while the retainer is clamped between electrodes and corona discharge is caused. The voltage to be applied is determined in consideration of the distance between the electrodes, ornamental particle size, etc.

Various electrophotographic techniques, electronic printing techniques and optical printing techniques can be applied to the present invention. These techniques are not limited to those described in the embodiments. Various electronic techniques, mechanical techniques, data processing techniques, etc. can be applied to the present invention, that include a latent image forming method, electrostatic image transfer method, developing method, charging device, developing device, dielectric device, photosensitive device, optical device, dielectric material, photosensitive material, etc. In addition, it is possible to output, as measuring data prior to or subsequent to processing, into a measuring body image data including date read by a scanner, data of image produced by computer graphics, etc.

The fluidizing and admixing step is taken by methods of blowing air, sucking air, applying ultrasonic waves or other vibration, turning a retainer upside down, attaching/detaching particles utilizing an electrostatic force, attaching/detaching particles utilizing a magnetic force, etc. One of or a plurality of these methods can be adopted.

In the case of air blowing, at least one of the lid and the bottom of the retainer is made air-permeable and air is blown into the retainer through the air-permeable lid or bottom to take the fluidizing and admixing step. It is preferable that the blow port is disposed below the retainer to blow air upward because this can attain ascent of particles by air and spontaneous descent thereof by gravity to carry out smooth fluidization and admixing of the particles. In the case of air suction, at least one of the lid and the bottom of the retainer is made air-permeable and air is sucked from the retainer through the air-permeable lid or bottom to take the fluidizing and admixing step. It is preferable that the suction port is disposed above the retainer to suck air upward because this can attain ascent of particles by air and spontaneous decent thereof by gravity to carry out smooth fluidization and admixing of the particle. In the case of turning the retainer upside down, it is preferable to use an endless retainer, which is slowly rotated in the direction of advancing the retainer to enable positional change of particles and spontaneous descent thereof by gravity to attain smooth admixing thereof. In the case of attachment/detachment of particles by an electrostatic force, one of the lid and the bottom of the retainer is used as a dielectric and the application of a voltage is effected and stopped relative to either electrodes attached to the lid or bottom or external electrodes to fluidize and admix the particles within the retainer. In the case of attachment/detachment of particles by a magnetic force, magnetic particles are used and application of a magnetic field to either an electromagnet attached to at least one of the retainer, its lid and its bottom or an external electromagnet or rotary permanent magnet is effected and stopped to fluidize and admix the magnetic particles within the retainer.

The air to be blown into the retainer is made dry or moist in accordance with the conditions under which the particles are set. When moist air is used, it is desirable to use water, a solvent, an additive, etc. in the form of vapor or spray. When particles are press-formed to produce ceramic articles, concrete articles, foodstuffs, etc., for example, the particles are preferably under a damp or wet condition with 3 to 20% wettability. Since use of dry air cannot make such a damp or wet condition, it is desirable to use moist air. In addition, when the particles are too dry or are maintained dry in the step of the setting step, the particles are positively given moisture into a wet condition.

When the fluidizing and admixing step is taken using air suction or air blow, all the particles retained in the retainer can be treated at a time or separately into some parts. When air blow is adopted, it is preferable that a slender nozzle is used and that air turbulence is caused by affording vibration to the nozzle, changing the intensity of the air to be blown, giving a structure capable of producing an eddy flow, etc., thereby fluidizing and admixing the particles. Intermittent blow of air may be adopted and be combined with spontaneous falling of the particles. Also when air suction is adopted, it is preferable to combine change in air suction intensity and/or direction with intermittent suction of air, thereby fluidizing and admixing the particles. When the particles are fluidized and admixed by falling, the retainer is preferably treated by vibration etc. to produce a turbulent flow. Furthermore, it is desirable to take the fluidizing and admixing step by combining air blow, air suction and falling of particles and further combining change of air flow intensity, air flow direction, intermittent air flow, vibration of the retainer, etc.

The material for a backing layer may either be dry or wet with at least one of water, oil, lubricant-bonding agent, solvent, setting agent and plasticizer and is in a state readily amenable to pulverization. Further, the backing layer may be a plate of metal, wood, cement, glass, ceramic, etc. or a sheet of paper, nonwoven fabric, woven fabric, knit fabric, plastic, etc. When such a plate or sheet is used as the backing layer, the plate or sheet serves as a base surface. Furthermore, any existing shaped article may be used as the base surface, whereafter a pattern course is formed on the base surface and the pattern course and the base surface may be set into an integral mass.

The base particles used in producing a concrete shaped article are dry and consist preponderantly of cement powder, resin, a mixture thereof, or a mixture further added with fine aggregates and may additionally include at least one of a pigment and a colorant. The material for the backing layer used in producing a concrete shaped article consists preponderantly of cement powder, resin, a mixture thereof, or a mixture further added with fine aggregates, may additionally includes at least one of a pigment, a colorant, coarse aggregates and at least one of various kinds of fibers, and may be either dry similarly to the base material or wet in the form of a concrete slurry obtained by kneading with water etc.

Both the dry base particles and the backing layer material may additionally include wood chips as aggregates or fine aggregates and may further include as blended therewith crushed or pulverized granite, crushed or pulverized marble, slag, light-reflecting particles, inorganic hollow bodies such as Shirasu balloons etc., particles or powders of ceramic, new ceramic, metal, ore or other such substances. They may also contain as additives a congealing and curing promoter, a waterproofing agent, an inflating agent and the like. The aforementioned various kinds of fibers include metal fibers, carbon fibers, synthetic fibers, glass fibers and the like.

All the materials are supplied into a frame etc., then fluidized and admixed and allowed to set into an integral mass. Otherwise, after the fluidization and admixing, water is supplied in a suitable amount to all portions of the interior of the frame etc., thereby setting the materials into an integral mass within the frame etc. If a wet material is used for the backing layer, the amount of water added is reduced in view of the water contained in the wet material. When a plate of metal, wood. cement, glass or ceramic or a sheet of paper, nonwoven fabric, woven fabric or knit fabric is used as the backing layer, for example, it is set integral with an ornamental particle course.

The dry base particles used in producing an artificial stone shaped article consist preponderantly of one or more of rock particles, ceramic particles, new ceramic particles, glass particles, plastic particles, wood chips, metal particles and the like and may, as found necessary, further have mixed therewith a pigment etc. into mixed aggregates. The materials for the backing layer used in producing an artificial stone shaped article is either dry or wet and consist preponderantly of one or more of rock particles, ceramic particles, new ceramic particles, glass particles, plastic particles, wood chips, metal particles and the like and may, as found necessary, further have mixed therewith a pigment etc. into mixed aggregates. Examples of the wet materials include materials including a setting agent for bonding the mixed aggregates. The setting agent filled in gaps formed between the adjacent dry base particles or contained in the backing layer materials is a mixture of cement powder and water, a mixture of cement powder, resin and water, or a mixture of resin, water and a solvent and may further contain particles of one or more of rock, ceramic, new ceramic, glass and plastic and may, as found necessary, be kneaded with a pigment or colorant and have mixed therewith various kinds of particles and powders, various kinds of fibers, various kinds of mixing agents and various kinds of additives. The various kinds of particles and powders include particles of slag, fly ash, Light-reflecting substances, etc. The various kinds of fibers include metal fibers, carbon fibers, synthetic fibers, glass fibers, etc. The various kinds of mixing agents and additives include shrink proofing agents, congealing and setting agents, delaying agents, waterproofing agents, inflating agents, water reducing agents, fluidizing agents and the like.

If necessary for enhancing the adherence of the setting agent and the dry base particles, the materials can be sprayed with or immersed in water, solvent or surface treatment agent. However, they are not kneaded with such moisture and are in a state readily amenable to pulverization.

The base materials after being fluidized and admixed with the ornamental particles can be set into an integral mass within a frame etc. by vacuum-suction treatment, centrifugal force or other such treatment or means for spreading the setting agent between adjacent particles or by using a mixture of aggregates and a setting agent as the material for the backing layer. When a plate of metal, wood, cement, glass or ceramic, or a sheet of paper, nonwoven fabric, woven fabric, knit fabric or plastic is used as the backing layer, the mixed particle course is attached as superposed on the backing layer into an integral mass.

For producing a ceramic shaped article or the raw product for a ceramic shaped article, the dry base particles consist preponderantly of particles or powders of one or more of clay, rock, glass, new ceramic, fine ceramic and glaze and may, as found necessary, have further mixed therewith a pigment and a colorant. Although they may contain water or a lubricant-bonding agent, they are not kneaded with water or lubricant-bonding agent and are in a state readily amenable to pulverization before supplying. The backing layer material used in producing a ceramic shaped article or the raw product for a ceramic shaped article consist preponderantly of particles or powders of one or more of clay, rock, glass, new ceramic and fine ceramic and may, as found necessary, have further mixed therewith a pigment and a colorant. They may be either dry similarly to the base particles or made wet by kneading with water or a lubricant-bonding agent. In addition, either the base particles and the backing layer materials may have further mixed therewith inorganic hollow bodies such as Shirasu balloons etc. and particles or powders of ceramic, metal, ore or other such substances, and may have added thereto various kinds of foaming agents, fluidization-preventing agents, supernatant agents, lubricating agents, bonding agents, adherence promoters and other such additives.

All the materials after fluidized and admixed with the ornamental particles and supplied into a frame etc. are allowed or caused to set into an integral mass without adding, or by adding, a predetermined amount of water or lubricant-bonding agent to plasticize them and applying pressure to the resultant mixture. The integral mass is removed from the frame etc. and used as a raw product. The raw product is sintered to obtain a ceramic shaped article. Otherwise, all the materials supplied into a refractory setter or the like frame are melted or fused by heating to obtain an integral mass, and the integral mass is removed from the setter. Otherwise, the ornamental particles are laid in the form of a layer on a plate of metal, glass or ceramic and melted or fused by heating to be made integral with the plate. By these methods, a patterned shaped article of enamel, stained glass, crystalline glass or the like can be produced.

The dry base particles used in producing a raw product for a patterned shaped metal article consist preponderantly of particles or powders of one or more of various metals and alloys with or without a lubricant added thereto. The particles may be ones which have been added with a lubricant after drying, but they are not kneaded with the lubricant and are in a state readily amenable to pulverization.

The backing layer materials used in this case consist preponderantly of particles or powders of one or more of various metals and alloys with or without a lubricant added thereto and may either be dry or made wet by kneading with a lubricant.

Examples of the lubricant include zinc stearate etc. In addition, either the dry base particles or the backing layer materials may have further mixed therewith a binder or other additives.

All the materials after fluidized and admixed with the ornamental particles and supplied into a frame etc. are exposed to pressure to set into an integral mass. The set integral mass is removed from the frame etc. and used as a raw product. The raw product is sintered to obtain a patterned shaped article. Otherwise, the materials are supplied in the form of a layer onto a plate of metal, glass, ceramic, etc. to obtain an integral mass. The integral mass is then sintered.

The dry base particles used in producing a patterned shaped article having an impasto layer are various kinds of powdered paint, and the backing layer is a plate or the like of metal, wood, cement, ceramic, etc. The various kinds of powdered paint include acrylic resin, polyester resin, acrylic-polyester hybrid resin, fluorine resin and similar resins having a pigment or colorant added thereto. The base particles are fluidized and admixed with ornamental particles to form a layer, and the layer is laid on the plate as a backing layer and melted and fused by heating to unite the two layers together. In uniting the two layers, pressure may be applied to the layers. As a result, it is possible to obtain a plate or sheet having an impasto layer thereon.

In producing a plastic shaped article, the dry base particles consist preponderantly of particles or powders of various kinds of plastics and may additionally contain a pigment or colorant. The particles may also contain a plasticizer or solvent, but are not kneaded with a plasticizer or solvent and are in a state readily amenable to pulverization. The backing layer materials may either be the aforementioned dry particles or be made wet by kneading with a plasticizer, solvent, etc. The various kinds of plastics include polyethylene, nylon, polypropylene, polycarbonate, acetal, polystyrene, epoxy, vinyl chloride, natural rubber, synthetic rubber, acrylonitrile-butadiene-styrene, polypropylene oxide, ethylene-vinyl acetate copolymer, fluorine resin and other thermoplastic and thermosetting resins. Both the dry base particles and the backing layer material may, as found necessary, contain a foaming agent, oxidation preventing agent, thermal stabilizer, bridging agent, other additives and particles of inorganic materials. The base particles and ornamental particles are fluidized and admixed with each other and are melted or fused by heating, while applying pressure thereto, if necessary, to obtain an integral mass. With this method, it is possible to produce a patterned shaped article of foamed styrol, patterned shaped bathtub or floor tile of plastic etc. In this case, the integral mass may be united with a plate of metal, wood, cement, ceramic, etc. or a sheet of paper, nonwoven fabric, woven fabric, knit fabric, plastic, etc.

In producing confectionery or other shaped foodstuffs, the dry base particles consist preponderantly of particles or powders of one or more of wheat, rice, potato, bean, sugar and corn, and may additionally contain seasonings and spices. The particles may also contain oil or water, but are not kneaded with oil or water and are in a state readily amenable to pulverization.

The backing layer material may either be one of the dry particles mentioned above or be made wet by kneading with oil or water. Both the base particles and the backing layer material may, as found necessary, further contain an inflating agent and other additives. The base particles are fluidized and admixed with ornamental particles, and the mixture is supplied into a frame etc. and is allowed or caused to set into an integral mass by adding a predetermined amount of water or oil to plasticize it. The integral mass is pressed and then removed from the frame etc. to obtain a raw product. The raw product is baked. Otherwise, all the materials are baked within the frame etc. With this method, it is possible to produce various kinds of patterned baked confectionery. In addition, it is also possible to produce patterned shaped articles, such as a patterned chocolate shaped article etc. by using particles or powders of the material melted by heating, such as chocolate.

The materials used in the present invention are not limited to the aforementioned materials and may be selected depending on the shaped article to be produced. Various shaped articles can be produced by the use of combined materials which differ in color, luster, texture and the like in the finished state. Since the sintering step is required in both the methods for producing a ceramic shaped article and a metal shaped article, if a combination of ceramic and metallic particles is used to express a pattern before the sintering step, a cloisonne article can be produced. Since the methods for producing a concrete shaped article and an artificial stone shaped article involve the same step, the materials for the two articles can be combined with each other.

In producing any of the aforementioned patterned shaped articles, it is desirable to apply vibration when the materials are supplied onto the base surface so as to ensure enough movement of the materials. Further, by rubbing with a brush or comb or applying a jet of air or water to the portion of the boundary between the different kinds of materials for the pattern course, the pattern can be blurred.

In addition, by providing on the base surface or pattern course a mat of nonwoven fabric, paper, or other water- or oil-absorbing material when producing an article, any excess amount of water, oil, lubricant-bonding agent, plasticizer or solvent in the material can be absorbed and the absorbed amount of water, oil, lubricant-bonding agent, plasticizer or solvent can be supplied to any portion deficient in them to uniformly disperse them in the shaped article. As a result, the ratio of the water (auxiliary agents) in the surface to the cement (resin) becomes small. This means that the strength of the shaped article as a whole is enhanced.

When an air permeable mat is used in the formation of an article under pressure, degassing is enhanced to obtain a dense article. By vibrating or pressing one or both of the dry pattern course and the backing layer when the two layers are allowed to set into an integral article, the integral article obtained becomes dense and is improved in strength. The article may be reinforced with reinforcing rods, long fibers, short fibers or wire nets by inserting them in or between the two layers. The method using an article obtained by the sheet making method or extrusion molding method and using any plate or sheet as the backing layer is applicable to the production of various articles including architectural panels and boards, wall sheets and tiles. The surface of an existing concrete article can be used as the base surface. In this case, the materials for the pattern course are discharged onto the concrete surface and set to be integral with the existing article.

The finished surface of a shaped article to be obtained can be curved if a deformable mat or a partially or entirely deformable frame is used.

The present invention has the constitution as described above and can therefore manifest the following effects.

Since base particles and ornamental particles are supplied into particle-retaining spaces of a retainer at positions corresponding to a pattern to be expressed and are mixed within the spaces, there is no need to take a preparatory mixing step in which mixed particles are prepared. This can simplify to a great extent an entire process for forming a patterned shaped article.

In addition, the space required for the mixing step is restricted to the narrow interior of the retainer, the fluidizing and mixing step can easily be effected with high efficiency. Therefore, patterned shaped articles can be produced at epochally high speeds to greatly enhance the productivity.

These effects will be heightened in producing shaped articles with a complicated pattern. The image forming time that has taken a unit of minute to a unit of hour will be shortened to a unit of second to a unit of minute, and the manufacturing cost will be greatly reduced.

Furthermore, since the fluidizing and mixing step is carried out at each particle-retaining space, a device for carrying out this step can be constituted of a mechanically simple and small-sized device. This can realize reduction of the entire size of an apparatus for producing patterned shaped articles.

Since a measuring device measures a predetermined amount of ornamental particles corresponding to the amount of a pattern to be expressed and supplies the predetermined amount of ornamental particles into the corresponding particle-retaining spaces, the predetermined amount of ornamental particles can be measured every one particle-retaining space with high precision. This also enables a pattern to be expressed precisely.

Since the measurement of the ornamental particle quantity is carried out on the basis of the electrophotographic technology, electronic printing technology or optical printing technology that can develop a latent image formed on a dielectric, the measurement control precision can be greatly enhanced. This also enables a pattern to be expressed precisely.

## Claims

1. A method for producing a patterned shaped article (1), characterised by the steps of:
supplying base particles (P1) and ornamental particles (P2) into particle-retaining spaces (4) of a retainer (3), at positions corresponding to a pattern course to be formed and mixing the base particles and ornamental particles within the particle-retaining spaces while supplying base particles alone into particle-retaining spaces of the retainer at positions corresponding to a base course;
removing the retainer; and
setting the pattern course and base course into an integral mass.

2. The method according to claim 1, characterised in that the step of using a measuring body (6) to measure a prescribed amount of ornamental particles corresponding to an amount of a pattern to be expressed is carried out before the step of supplying the the base particles and ornamental particles into the particle-retaining spaces.

3. The method according to claim 2, wherein the measurement using the measuring body is based on an electrophotographic technology that develops a latent image (6d) formed on a dielectric (6b).

4. The method according to claim 2, wherein the measurement using the measuring body is based on an electronic printing technology that develop a latent image (6d) formed on a dielectric (6b).

5. The method according to claim 2, wherein the measurement using the measuring body is based on an optical printing technology that develop a latent image (6d) formed on a dielectric (6b).
